# EUROPEAN PATENT SPECIFICATION

(11) **EP 1 755 933 B1**
(45) Date of publication and mention of the grant of the patent: **23.12.2009**
(21) Application number: 05748403.2
(22) Date of filing: 06.05.2005
(51) Int. Cl.: B60T 8/44, B60T 7/20

(54) **SLIP CONTROL BOOST BRAKING SYSTEM**
SCHLUPFREGELUNGSVERSTÄRKUNGSBREMSSYSTEM
SYSTEME DE FREINAGE ANTIPATINAGE A SERVOCOMMANDE

(30) Priority: 06.05.2004 US 568748 P; 29.07.2004 US 592221 P; 03.12.2004 US 632787 P; 20.01.2005 US 645262 P
(43) Date of publication of application: 28.02.2007
(73) Proprietor: KELSEY-HAYES COMPANY, Livonia, MI 48150 (US)
(72) Inventor: GANZEL, Blaise, J., Ann Arbor, MI 48105 (US)
(74) Representative: Beyer, Andreas
(86) International application number: PCT/US2005/016179
(87) International publication number: WO 2005/108179

(56) References cited:
- DE-A1- 10 116 203
- US-A- 3 729 235
- US-A- 3 870 377
- US-A- 4 604 870

## Description

### BACKGROUND OF THE INVENTION

### FIELD OF THE INVENTION

The present invention relates in general to a braking system for applying hydraulic braking control to vehicle brakes.

More particularly, the present invention relates to a braking system for applying hydraulic braking during electrical and hydraulic failures.

### DESCRIPTION OF THE RELATED ART

Electric-hydraulic braking systems typically include a manually powered master cylinder coupled to vehicle brakes on the vehicle wheels through isolation valves. When a driver of the vehicle applies a pressure to the brake pedal, hydraulic pressurized fluid is provided to a pedal simulator to simulate the pressure exerted against a driver's foot in a conventional braking system. Pressure transducers measure the applied force of the pressure exerted on the pedal by the driver's input and produces a signal representative of the desired braking effort by the driver. The signal indicative of the applied pressure is provided to an electronic control unit which controls an operation of one or more motor operated pumps to deliver a flow of pressurized hydraulic braking fluid to the vehicle brake actuators.

Typical hydraulic pedal simulators are isolated from the actual braking circuit that is pressurizing the vehicle brake actuators. These pedal simulators are configured in the brake circuit such that pressurized hydraulic brake fluid from the master cylinder flows only to a single chamber within the pedal simulator. The release of pressured hydraulic brake fluid from the chamber is the result of the driver releasing the brake pedal which allows the withdrawal of pressurized brake fluid from the chamber in cooperation with a pedal simulator spring. As a result, during braking operations where hydraulic braking is applied by the motor operated pump, the driver is isolated from the circuit supplying the pressurized hydraulic brake fluid to the vehicle brake actuators. Some systems have a fluid circuit coupled to a second chamber of a pedal simulator (opposite the piston of the first chamber) but this is to vent the chamber to atmospheric pressure for allowing displacement of the piston.

Furthermore, during an electrical or hydraulic failure, electronic hydraulic braking systems include of safeguard in the event a hydraulic failure or electrical failure occurs, then a manual push through operation may be utilized. This typically includes de-energizing one or more isolation valves so that manual braking (via a backup circuit) may be performed directly from master cylinder to the vehicle brake actuators without the assistance of the motor operated pumps. However, systems (such as in U.S Patent 2002/153767 assigned to Robert Bosch GmbH) typically rely on one or more isolation valves to allow pressurized brake fluid from the master cylinder to actuate one or more vehicle brake actuators, respectively. Some braking system include a single circuit for applying hydraulic braking fluid to a set of wheels (i.e., either the front or rear set of wheels) or two circuits (i.e., a first circuit for a first set of wheels and a second circuit for second set of wheels) to both sets of wheels. However, such systems rely on an assumption that the isolation valves which allow the flow of hydraulic brake fluid from the master cylinder to the vehicle brake actuators will de-energize open. Such systems are susceptible to having no manual push through if the isolation valves become inoperable in the closed position or if a hydraulic leak occurs.

### SUMMARY OF THE INVENTION

In one aspect of the present invention, a braking system is provided for applying pressurized hydraulic brake fluid to a plurality of vehicle brakes. The system includes a source of pressurized brake fluid, a first brake fluid circuit, and a boost valve for controlling a flow of brake fluid from the source to the first circuit. A first brake actuator is actuated by brake fluid from the first circuit and a second brake actuator operated by an application of brake fluid from the first circuit. The system includes a second brake fluid circuit. A third brake actuator is actuated by brake fluid from the second circuit. The system further includes a third brake fluid circuit. A fourth brake actuator actuated by brake fluid from the third circuit. A master cylinder including a primary piston, a first secondary piston, and second secondary piston. The first and second secondary pistons are capable of being each independently operably displaced by an application of pressurized fluid from the first circuit to pressurize brake fluid in, respectively, the second circuit to operate the third brake actuator and the third circuit to operate the fourth brake actuator

In yet another aspect of the present invention, a braking system includes a master cylinder having a first secondary chamber in fluid communication with the second circuit. The first secondary piston being disposed in the first secondary chamber. A second secondary chamber in fluid communication with said third circuit. The second secondary piston disposed in the second secondary chamber. The first secondary piston and the second secondary piston pressurize brake fluid in the first and second secondary chambers, respectively, for actuating the third brake actuator and the fourth brake actuator during a brake failure.

In yet another aspect of the present invention, a braking system includes a pedal simulator including a first chamber, a second chamber, a pedal simulator piston, and a pedal simulator spring. The pedal simulator piston separates the first chamber and the second chamber. The pedal simulator spring is disposed in the second chamber for cooperatively providing a resistance force to a brake pedal during a brake apply operation. The first chamber is in fluid communication with the primary chamber of the master cylinder for receiving brake fluid from the primary chamber during a brake apply operation. The second chamber is in fluid communication with the first circuit for providing a return passage of brake fluid from the first circuit during a brake release operation.

In yet another aspect of the present invention, a braking system includes a pedal simulator having a universal valve body, a simulator sleeve, and a simulator piston. The simulator sleeve is adaptable to receive various sized diameter simulator pistons.

In yet another aspect of the present invention, a braking system includes a medium pressure accumulator in fluid communication and disposed between a first, second, third, fourth set of valves, respectively, and a source of pressurized brake fluid. The medium pressure accumulator includes a first pressure chamber for storing medium pressurized brake fluid from the source of pressurized brake fluid and a second pressure chamber for storing highly pressurized brake fluid from the source of pressurized brake fluid. Medium pressurized brake fluid within the first pressure chamber is selectively applied to the first circuit during low flow rate braking demands and highly pressurized brake fluid within the second pressure chamber is selectively applied to the first circuit during high flow rate braking demands.

In yet another aspect of the present invention, a braking system includes a first set of valves in fluid communication with a first circuit for cooperatively supplying brake fluid received from a boost valve to a first brake actuator and for cooperatively relieving pressurized brake fluid from the first brake actuator. A second set of valves in fluid communication with the first circuit for cooperatively supplying pressurized brake fluid received from the boost valve to the second brake actuator and for cooperatively relieving pressurized brake fluid from the second brake actuator. A third set of valves in fluid communication with the first circuit for cooperatively supplying pressurized brake fluid received from the boost valve to act on a second circuit for actuating a third brake actuator and for cooperatively relieving pressurized brake fluid from the third brake actuator. A fourth set of valves in fluid communication with the first circuit for cooperatively supplying pressurized brake fluid received from the boost valve to act on a third circuit for actuating a fourth brake actuator and for cooperatively relieving pressurized brake fluid from the fourth brake actuator.

In yet another aspect of the present invention, a braking system includes a master cylinder having an inductive coil disposed about a primary piston. The inductive coil induces a high frequency current on the primary piston for inductively sensing a position of the primary piston within the primary housing of said master cylinder.

In yet another aspect of the present invention, a braking system includes a master cylinder bleed valve in fluid communication and disposed between a second intermediate chamber and a third intermediate chamber. The bleed valve controls a directional flow of brake fluid through the second intermediate chamber and the third intermediate chamber of the master cylinder during a no brake apply condition for purging entrapped gas from the master cylinder.

### BRIEF DESCRIPTION OF THE DRAWINGS

Fig. 1 is a schematic of a braking system according to a first preferred embodiment of the present invention.
Fig. 2 is an enlarged schematic view of a master cylinder according to a first preferred embodiment of the present invention.
Fig. 3 illustrates a cross section view of a portion of the master cylinder taken at plane A-A as shown in Fig. 2.
Fig. 4 is an enlarged schematic view of a master cylinder according to a second preferred embodiment of the present invention.
Fig. 5 is a schematic of a braking system according to a third preferred embodiment of the present invention.
Fig. 6 is a cross sectional view of a medium pressure accumulator illustrated in Fig. 5.
Fig. 7 is schematic of a braking system according to a fourth preferred embodiment of the present invention.
Fig. 8 is cross sectional view of a multi-function valve as illustrated in Fig. 7.
Fig. 9 is an enlarged view of a master cylinder according to the fifth preferred embodiment of the present invention.
Fig. 10 is a schematic of a braking system according to a sixth preferred embodiment of the present invention.
Fig. 11 is a schematic of a braking system according to a seventh preferred embodiment of the present invention.
Fig. 12 is cross sectional view of a bleed valve as illustrated in Fig. 11.

### DETAILED DESCRIPTION OF PREFERRED EMBODIMENTS

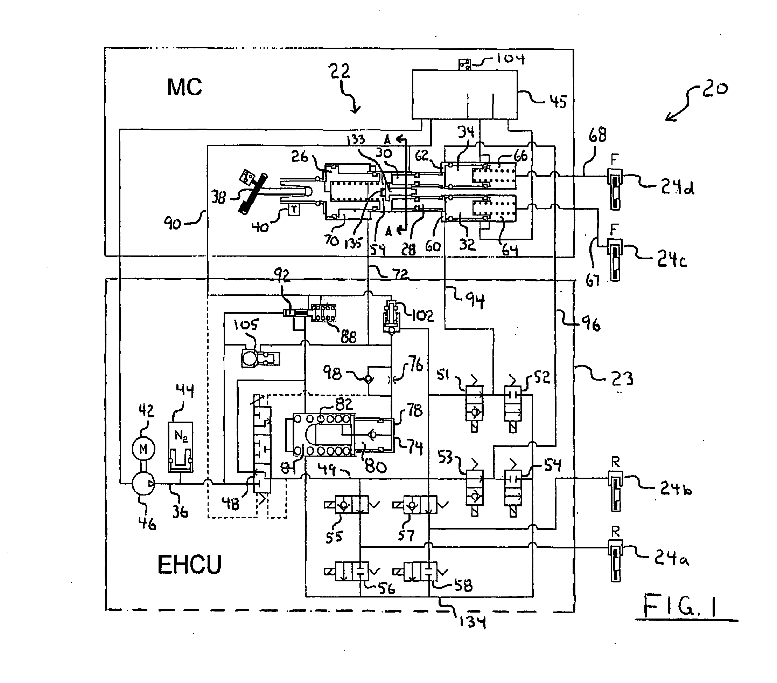

There is shown in FIG. 1, a first embodiment of a vehicle brake system indicated generally at 20, in accordance with the invention for applying active hydraulic boost in a braking system. The brake system 20 may suitably be used on a ground vehicle such as an automotive vehicle having four wheels and a brake for each wheel. Furthermore, the brake system 20 can be provided with other braking functions such as anti-lock braking and other slip control features to effectively brake the vehicle while simulating a normal response and pedal feel to the operator of the vehicle.

The brake system 20 includes a master cylinder 22 in fluid communication with a reservoir 45 that cooperatively acts with a brake module 23 for actuating a first vehicle brake 24a and a second vehicle brake 24b on a rear vehicle axle (not shown) and for actuating a third vehicle brake 24c and a fourth vehicle brake 24d of a front vehicle axle (not shown) for braking a vehicle. Each of the vehicle brakes 24a-d includes a conventional brake actuator operated by the application of pressurized brake fluid. The brake actuator may be, for example, a brake caliper mounted on the vehicle to engage a frictional element (such as a brake disc) that rotates with a vehicle wheel to effect braking of the associated vehicle wheel.

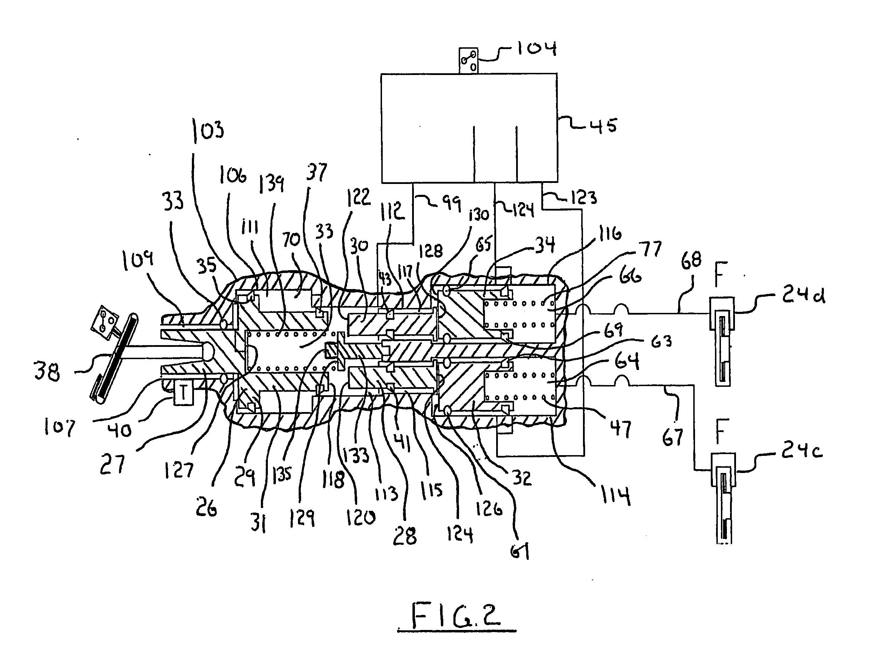

As may also be seen in Fig. 2, the master cylinder 22 includes a master cylinder housing 103. Although the master cylinder housing 103 is described below as individual housing portions, the master cylinder housing 103 may be formed as a single housing, or alternatively, may be two or more separately formed housings coupled together. The master cylinder 22 includes a primary housing 106 formed at a first end 107 of the master cylinder housing 105. The first end 107 includes ah open ended first cylindrical bore 109 of a first diameter. The first cylindrical bore 109 steps to a second cylindrical bore 111 within the primary housing 106 having a diameter larger than the first cylindrical bore 109. The first cylindrical bore 109 and the second cylindrical bore 111 are axial aligned to one another. The primary housing 106 includes a first port that is coupled to fluid circuit 72 (discussed below).

The primary housing 106 is integrally formed to a first intermediate housing 108 that includes a third cylindrical bore 113. The second cylindrical bore 111 of the primary housing 106 steps to the third cylindrical bore 113 that has a diameter less than the second cylindrical bore 111 but larger than the first cylindrical bore 109. The second cylindrical bore 111 is axially aligned with the third cylindrical bore 113. The third intermediate housing includes a second port coupled to fluid circuit 99 that is in fluid communication with the reservoir 45.

The first intermediate housing 108 is integrally formed to a second intermediate housing 110 and a third intermediate housing 112. The second intermediate housing 110 includes a fourth cylindrical bore 115 and the third intermediate housing 112 includes a fifth cylindrical bore 117. The third cylindrical bore 113 of the third intermediate housing 108 steps down to both the fourth cylindrical bore 115 and the fifth cylindrical bore 117. The fourth cylindrical bore 115 and the fifth cylindrical bore 117 are parallel to one another and have equal diameters that are substantially less than the third cylindrical bore 113 and both cylindrical bores 115 and 117.

The second intermediate housing 110 is integrally formed to a first secondary housing 114. The first secondary housing 114 includes sixth cylindrical bore 119. The fourth cylindrical bore 115 steps to the sixth cylindrical bore 119 that is of a diameter larger than the fourth cylindrical bore 115. The sixth cylindrical bore 119 is axially offset from the fourth cylindrical bore 115.

Similarly, the third intermediate housing 112 is integrally formed to a second secondary housing 116. The second secondary cylindrical bore 116 includes a seventh cylindrical bore 121. The fifth cylindrical bore 117 steps to the seventh cylindrical bore 121 that is of a diameter larger than the than fifth cylindrical bore 117. The seventh cylindrical bore 121 is axially offset from the fifth cylindrical bore 117.

The first secondary housing 114 includes a fourth port coupled to fluid circuit 94, a fifth and sixth port coupled to fluid circuit 123, and a seventh port coupled to fluid circuit 67 which will be discussed later. Similarly, the second secondary housing 116 includes an eighth port coupled to fluid circuit 96, a ninth and tenth port coupled to fluid circuit 125, and an eleventh port coupled to fluid circuit 67 which will be discussed later.

A brake pedal is received in the first end 107 and is coupled to a first end of a primary piston 26 of the master cylinder 22. A travel sensor 40 is coupled to the primary housing 106 for producing a signal that is indicative of the length of travel of the brake pedal 38.

The primary piston 26 includes a first cylindrical portion 27 having an outer diameter slightly smaller than the inner diameter of the first cylindrical bore 109. The first cylindrical portion 27 of the primary piston 26 is slidable within the first cylindrical bore 109. A seal 35 is embedded an inner surface of the first cylindrical bore 109 for preventing brake fluid from passing between the first cylindrical portion 27 and inner surface of the first cylindrical bore 109 of the primary housing 106.

The first cylindrical portion 27 steps to a second cylindrical portion 29. The outer diameter of the second cylindrical portion 29 is substantially larger than the first cylindrical portion 27. The second cylindrical portion 29 is slidable within the second cylindrical bore 111 and includes a seal 37 around the outer diameter for preventing brake flow between the second cylindrical portion 29 and an inner surface of the second cylindrical bore 111.

The second cylindrical portion 29 of the primary piston 26 steps down to a third cylindrical portion 31. The outer diameter of the third cylindrical portion 31 is smaller than the outer diameter of the second cylindrical portion 29. The third cylindrical portion 31 is slidable within both the second cylindrical bore 111 and the third cylindrical bore 113. The third cylindrical portion 31 includes a seal 39 around the outer diameter for preventing brake flow between the third cylindrical portion 29 and an inner surface of the third cylindrical bore 113. An annular primary chamber 70 of brake fluid is formed between the seal 35 and seal 39.

The second cylindrical portion 29 and the third cylindrical portion 31 includes a uniform inner bore 33 for receiving a primary piston spring 139. The spring 117 is disposed in a precompressed state within the uniform inner bore 33 between an abutment surface 127 of the primary piston 26 and an abutment surface 129 of an abutment member 133. The abutment member 133 may include a stepped portion 135 for retaining the primary piston spring 139 on the abutment surface 129.

A second end surface 118 of the primary piston 26 is aligned with a first end 120 of a first intermediate piston 28. The first intermediate piston 28 is disposed within the within both the first intermediate housing 108 and the second intermediate housing 110. The first intermediate piston 28 includes a seal 41 disposed around the outer diameter for preventing brake flow between the first intermediate piston 28 and an inner surface of the fourth cylindrical bore 115. Similarly, the second end surface 118 of the primary piston 26 is aligned with a first end 122 of the second intermediate piston 30. The second intermediate piston 30 is disposed within both the first intermediate housing 108 and the third intermediate housing 112. The second intermediate piston 30 includes a seal 43 disposed around the outer diameter for preventing brake fluid flow between the second intermediate piston 30 and an inner surface of the fifth cylindrical bore 117. A first intermediate chamber 59 of brake fluid is formed by the by the seal 39 and seals 41 and 43, respectively.

A first secondary piston 32 is slideably disposed within a first secondary housing 114. The outer diameter of the first secondary piston 32 is larger than the outer diameter of the second intermediate piston 28. A second end 126 of the first intermediate piston 28 and an end portion 126 of the second secondary piston 32 are axially offset but slideably aligned for contacting one another. The first secondary piston 28 includes a pair of seals 61 and 63 disposed about the outer diameter for preventing brake fluid flow between the first secondary piston 32 and an inner surface of the sixth cylindrical bore 119. A second intermediate chamber of brake fluid 60 is formed between seal 41 and 61. A first secondary chamber of brake fluid 64 is formed by the seal 63 and the first secondary housing 114. A spring 47 is disposed within the first secondary housing 114 in a precompressed state for biasing the first secondary piston 32.

A second secondary piston 34 is slideably disposed within a second secondary housing 116. The outer diameter of the second secondary piston 34 is larger than the outer diameter of the third intermediate piston 30. A second end 128 of the second intermediate piston 30 an end portion 130 of the second secondary piston 34 are axially offset but slideably aligned for contacting one another. The second secondary piston 34 includes a pair of seals 65 and 69 disposed about the outer diameter for preventing brake fluid flow between the second secondary piston 34 and an inner surface of the seventh cylindrical bore 121. A third intermediate chamber of brake fluid 62 is formed between seal 43 and 65. A second secondary chamber of brake fluid 66 is formed by the seal 65 and the first secondary housing 116. A spring 77 is disposed within the second secondary housing 116 in a precompressed state for biasing the second secondary piston 34.

A primary circuit 36 provides hydraulic braking fluid from a reservoir 45 to a pump 46 driven by the electric motor 42. In the preferred embodiment, the motor 42 is a flux switching brushless motor that inherently senses its torque output which will be discussed *infra*. A high pressure accumulator (HPA) 44 is in fluid communication with the pump 46 via fluid circuit 36. The HPA 44 shown is a piston style with sliding seal and a pre-charge of nitrogen acting as a spring. A diaphragm-type HPA with a diaphragm made of metal, rubber, plastic, or other elastomer can also be used. Other types of suitable gas may be used which have a compressible volume. The pre-charge of nitrogen contained in the HPA 44 biases the piston toward the fluid connection of the HPA 44. Of course, any suitable accumulator design may be used, and the HPA 44 need not be of the piston-type design depicted. For example, the HPA 44 may be a bladder or a diaphragm-driven accumulator. Accumulators are sized according to the actual gas volume when all the brake fluid is discharged. The available volume of brake fluid in a usable pressure range for a given accumulator, known as working volume, is affected by the amount of compressible gas available to discharge it from the accumulator. The working volume varies as the pressure and temperature of the compressible gas varies. Rate of charge and discharge also needs to be considered when sizing the accumulator.

Pressurized brake fluid from the pump 46 is supplied to the HPA 44 in cooperation with an electro-hydraulic pilot operated boost valve 48. The boost valve 48, is a variable flow valve that may maintain pressure in fluid circuit 36 to allow pressurized brake fluid to flow from the discharge of the pump 46 to the HPA 44 for pressurizing the HPA 44 with pressurized brake fluid. The boost valve 48 further allows the flow of pressurized brake fluid via a first circuit 49 for actuating the vehicle brakes 24a-d.

A first set of isolation valves 55 and 56 are two-way isolation valves in fluid communication with the first circuit 49 for cooperatively supplying brake fluid received from the boost valve 48 to the first brake actuator 24a and for cooperatively relieving pressurized brake fluid from the first brake actuator 24b. A second set of isolation valves 57 and 58 are two-way isolation valves in fluid communication with the first circuit for cooperatively supplying pressurized brake fluid received from the boost valve 48 to the second brake actuator 24b and for cooperatively relieving pressurized brake fluid from the second brake actuator 24b.

A third set of isolation valves 51 and 52 are in fluid communication with the first circuit 49 and fluid circuit 94 for cooperatively supplying pressurized brake fluid received from the boost valve 48 for actuating the third brake actuator 24c and for cooperatively relieving pressurized brake fluid from the third brake actuator 24c.

A fourth set of isolation valves 52 and 54 are in fluid communication with the first circuit 49 and fluid circuit 96 for cooperatively supplying pressurized brake fluid received from said boost valve 48 for actuation the fourth brake actuator and for cooperatively relieving pressurized brake fluid from said fourth brake actuator 24b.

A pedal simulator 74 simulates the characteristics of a conventional boost system as felt by the driver at the brake pedal 38. The pedal simulator includes a first chamber 78 in fluid communication with the primary chamber 70 of the master cylinder 22 for receiving brake fluid from the primary chamber 70 during a brake apply operation. A pedal simulator piston 80 and a pedal simulator spring 82 are disposed between the first chamber 78 and a second chamber 84. The second chamber 84 is in fluid communication with the first circuit 49 for providing a return passage of brake fluid from the first circuit 49 during a brake release operation.

A dampening orifice 76 is disposed between the primary chamber 70 and the pedal simulator 74. The dampening orifice 76 includes a narrowed cross-sectional passage that restricts the amount of hydraulic brake fluid that can flow through the dampening orifice 76. A check valve 98 is coupled in parallel to the dampening orifice 76 between the primary chamber 70 and the pedal simulator 74.

A bypass valve 88 is a hydraulic spring loaded valve which includes an annular flow-around chamber that when actuated allows pressurized hydraulic brake fluid to flow from fluid circuit 86 to fluid circuit 90. The bypass valve connected between the pedal simulator via fluid circuit 86 and the reservoir via fluid circuit 90. A spring loaded bypass valve piston 92 fluidically opens and closes the valve to allow brake fluid flow.

The brake module 22 includes a failsafe valve 102 that is in fluid communication with the primary chamber 70 of the master cylinder 22 via fluid circuit 72 and the first circuit 49. The failsafe valve 102 includes a spring loaded piston and a ball that opens and closes based on a pressure differential between fluid circuits 72 and 49.

A shuttle valve 105 is in fluid communication with the primary chamber 70 through fluid circuit 72 and the boost valve through fluid circuit 36. The shuttle valve 105 includes a shuttle ball for porting the shuttle valve between an open and close position based on a pressure differential between fluid circuit 72 and 36. The shuttle valve further includes a spring activated piston to manual bias the shuttle valve for purging entrapped gas within said braking system.

During a typical braking condition for the braking system 20, a brake pedal 38 is depressed by the operator of the vehicle. The brake pedal 38 is coupled to a travel sensor 40 for producing a signal that is indicative of the length of travel of the brake pedal 38 and providing the signal to a control module (not shown). The control module receives various signals, processes signals, and controls the operation of various components of the brake system 20 in response to the received signals. Preferably, the control module communicates with a powertrain control module (not shown) and other additional braking controllers of the vehicle to provide coordinated braking during advanced braking control schemes (e.g., anti-lock braking (AB), traction control (TC), and vehicle stability control (VSC)). The control module provides a signal to the electric motor 42 correlating to the flow required to maintain a reserve of fluid in the HPA 44. The primary circuit 36 provides hydraulic braking fluid from the reservoir 45 to the pump 46 driven by the electric motor 42.

Pressurized brake fluid from the pump 46 is supplied to the HPA 44 in cooperation with the electro-hydraulic pilot operated boost valve 48. The maximum pump output is sufficient to prevent depletion of the HPA 44 and is able to supply at least on apply to lock-up pressure should it be required. The boost valve 48 includes a control valve that is electrically positioned by the control module. It is desirable to control the boost valve 48 so that the control pressure of the boost valve 48 is proportional to an energizing electrical signal received from the control module. The boost valve 48 will position itself to permit the flow required to achieve the desired control pressure. This allows for variable flow of the hydraulic brake fluid as opposed to either a fully open port or a fully closed port.

As pressurized brake fluid flows into the HPA 44 through the fluid connection, the piston of the HPA 44 is moved to further compress the nitrogen gas precharge. Under this condition, the HPA 44 contains a reservoir of brake fluid which is pressurized by the piston under the influence of the compressed nitrogen gas, which may be used to assist in actuating the vehicle brakes 24a, b, c, and d whether or not the pump 46 is running.

When braking is required, the boost valve 48 is energized to allow the pressurized brake fluid provided by the HPA 44 and the pump 46 to actuate the vehicle brakes 24a, b, c, and d via the first circuit 49. Isolation valves 55 and 56 are ported in a de-energized position to allow pressurized brake fluid to be directed to the rear vehicle brakes 24a and 24b for brake actuation. Isolation valves 51 and 53 are ported in a de-energized position to allow pressurized brake fluid to flow to a second intermediate chamber 60 and a third intermediate chamber 62, respectively. The pressurized hydraulic brake fluid entering the second and third intermediate chamber 60 and 62 exerts a force on a first secondary piston 32 and a second secondary piston 34, respectively. The exerted force on the first and second secondary piston 32 and 34 pressurizes the brake fluid in a first secondary chamber 64 and a second secondary chamber 66. The pressurized hydraulic brake fluid in the first secondary chamber 64 is in fluid communication with vehicle brake 24c for actuating vehicle brake 24c via the second circuit 67. Similarly, the pressurized hydraulic brake fluid in the second secondary chamber 26 is in fluid communication with vehicle brake 24d for actuating vehicle brake 24d via the third circuit 68.

To provide pedal feedback to the driver during boost operation, the primary piston 26 forces hydraulic brake fluid out of a primary chamber 70 via fluid circuit 72 to a pedal simulator 74 in response to the depressed brake pedal 38.

The dampening orifice 76 disposed between the primary chamber 70 and the pedal simulator 74 restricts the amount of hydraulic brake fluid that can flow through the dampening orifice 76. As the hydraulic brake fluid travels through the dampening orifice 76, an operator depressing the brake pedal 38 feels a resistance due to the restricted flow of hydraulic brake fluid within the dampening orifice 76. This restricted flow of hydraulic brake fluid causes a higher pressure in the primary chamber 70 than in the pedal simulator 74. Added resistance is further provided by the pedal simulator 74. As the hydraulic brake fluid is forced into a pedal simulator first chamber 78 from fluid circuit 72, pressurized hydraulic brake fluid exerts a force on a simulator piston 80, which inturn, exerts a force and compresses a simulator spring 82. The resistive force exerted by the simulator spring 82 in cooperation with the dampening orifice 76 simulates the characteristics of a conventional boost system as felt by the driver at the brake pedal 38.

As the pressurized hydraulic brake fluid fills and expands the pedal simulator first chamber 78, hydraulic brake fluid stored in a pedal simulator second chamber 84 is forced out through fluid circuit 86. The bypass valve 88 when actuated allows pressurized hydraulic brake fluid to flow from fluid circuit 86 to fluid circuit 90. Fluid circuit 90 is fluidically connected to the reservoir 45 which is vented at atmospheric pressure for storing hydraulic brake fluid. A spring loaded bypass valve piston 92 is fluidically connected to fluid circuit 36. Pressure exerted in fluid circuit 36 by the motor 42 or HPA 44 exerts a force on the bypass valve piston 92. When a predetermined amount of pressure is exerted on the bypass valve piston 92 from fluid circuit 36, the annular flow-around chamber ports hydraulic brake fluid from fluid circuit 36 to fluid circuit 90 for allowing pressurized hydraulic brake fluid to flow to the reservoir 45. Excess pressure in fluid circuit 36 will cause further movement of piston 92 until fluid bypasses through circuits 86 and 90 to the reservoir 45.

As the driver releases the brake pedal 38, the control module receives a signal from the travel sensor 40 identifying the driver's action to de-actuate the vehicle brakes 24a, b, c, and d. The control module provides a signal to de-energize the boost valve 48. When in the de-energized position, the flow of pressurized hydraulic brake fluid from the pump 46 and HPA 44 is restricted to the vehicle brakes 24a, b, c, and d. Furthermore, while in the de-energized position, the boost valve 48 is ported to relieve the pressurized hydraulic brake fluid in the fluid circuits that are actuating vehicle brakes 24a, b, c, and d. When de-energized, the boost valve 48 ports fluid circuit 49 to fluid circuit 86 allowing the release of pressurized hydraulic brake fluid within fluid circuits 49, 94, and 96 to the pedal simulator second chamber 84 and through the bypass valve 88 (the volume displaced in the brakes will probably not be equal to the volume displaced in the pedal simulator).

Pressure is relieved in the second intermediate chamber 60 and the third intermediate chamber 62 of the master cylinder 22 in response to the porting of the boost valve 48 to the de-energized position. In response to the release of pressure in the second and third intermediate chambers 60 and 62, a respective secondary piston spring within the first secondary chamber 64 and the second secondary chamber 66 exerts a force on the first secondary piston 32 and the second secondary piston 34. The first and second secondary pistons 32 and 34 are displaced in response to the resistive forces of the respective secondary piston springs, and as a result, hydraulic brake fluid within the second intermediate chamber 60 and third intermediate chamber 62 is forced out of each respective chamber. The hydraulic brake fluid within the second and third intermediate chambers 60 and 62 is directed to fluid circuit 94 and fluid circuit 96, respectively. The hydraulic brake fluid of fluid circuits 94 and 96 is ported through isolation valves 52 and 54, respectively, and thereafter to fluid circuit 134 which is in fluid communication with circuit 86 via the second chamber 84 of the pedal simulator 74.

The flow of hydraulic brake fluid into the pedal simulator second chamber 84 in cooperation with the pedal simulator spring 82 exerts an opposing force of pressure in the pedal simulator chamber 20 acting against the pedal simulator piston 80. The hydraulic brake fluid within the pedal simulator first chamber 78 is forced to the primary chamber 70 of the master cylinder 22 via fluid circuit 72. The primary piston spring 139 in cooperation with the return of brake fluid in the primary chamber cooperatively returns the primary piston 26 to a no brake apply position when no force is exerted on the brake pedal 38.

Consequently, pedal pressure is never isolated from the driver when exerting a force or relieving pressure on the brake pedal 38 during normal boost braking operation. The pedal simulator spring 82 in cooperation with the dampening orifice 76 maintains a resistive force as hydraulic brake fluid in the primary chamber 15 is pressurized by the brake pedal 38 and enters the pedal simulator first chamber 78. When the brake pedal 38 is released, pressurized hydraulic brake fluid within each of the respective circuits used to actuate the respective vehicle brakes returns to the to the pedal simulator second chamber 84 and a resistive force (in cooperation with the pedal simulator spring 82) is applied to the brake pedal 38 as it is released. As a result, the pedal pressure from the respective hydraulic brake circuits exerted on the brake pedal 38 is maintained during normal braking conditions.

For example, as the driver releases the brake pedal 38 from a current braking position, the primary piston 26 which is coupled to the brake pedal 38 displaces so as to relieve pressure in the primary chamber 70, which in turn, relieves pressure in the pedal simulator first chamber 78. In response to the release of pressure on the pedal simulator first chamber 78, the pedal simulator spring 82 exerts an opposing force on the simulator piston 80 to force hydraulic brake fluid from the pedal simulator first chamber 78 to primary chamber 70 via fluid circuit 72. A check valve 98 is coupled in parallel to the dampening orifice 76 to allow the hydraulic brake fluid to flow to the primary chamber 70 at a faster rate than what the dampening orifice 76 would allow. The check valve 98 is ported to only allow hydraulic brake fluid to flow from the pedal simulator 74 to the primary chamber 70. An advantage of the brake system 20 is that in the event of a power loss during boost operation, pedal drop is avoided because the hydraulic brake fluid applied by the boost valve 48 returns to the primary chamber 70 via the pedal simulator 74 as opposed to being directed through the bypass valve 88 to the reservoir 45.

As discussed earlier, preferably a flux switching brushless motor 42 is used to drive the pump 46. In conventional electrical hydraulic braking systems, typically one or more pressure sensors are included downstream from a pump for determining pressure within a respective fluid circuit. The sensed pressure is monitored by the control module and provides feedback to a motor for controlling operation of the pump to maintain pressure of hydraulic brake fluid within a respective circuit. However, by integrating the flux switching brushless motor 42, the pressure sensors are eliminated in the brake module 23. The motor 42 self-monitors its output torque based on a correlation of current-to-torque and maintains a respective pressure within fluid circuit 36 as directed by the control module based on a current-to-pressure correlation. The control module will monitor the travel sensor 40 to determine the braking demand input by the driver in cooperation with other sensors located throughout the vehicle that supply signal inputs to the control module to assist in determining the pump flow required to meet system demand and keep the HPA 44 sufficiently charged. Other sensor inputs received by the control module include wheel speed of each of the vehicle's wheels, vehicle deceleration, steering angle, vehicle yaw rate, vehicle speed, vehicle roll rate, and signals from radar, infrared, ultrasonic, or similar collision avoidance systems, cruise control systems (including AICC-Autonomous Intelligent Cruise Control Systems), and the like.

In the event of an electrical brake failure, the brake system 20 provides for manual braking. During an electrical failure, the motor 42 will cease to operate thereby failing to produce pressurized hydraulic brake fluid from the pump 46. Furthermore, the boost valve 48 returns to a de-energized position if energized. To provide manual braking, the driver exerts a high force on the brake pedal 38. The hydraulic brake fluid within the primary chamber 70 is pressurized and directed through fluid circuit 72. The bleed valve 105, which will be discussed in detail later, allows flow to fluid circuit 36. When a first predetermined threshold pressure is hydraulically exerted on the boost valve 48, the boost valve 48 is hydraulically actuated to an apply position. The boost valve 48 is ported so that the pressurized hydraulic brake fluid flows through fluid circuit 49 for actuating the vehicle brakes 24a, b, c, and d as discussed *supra*. Also any pressurized hydraulic fluid in the HPA 44 may also be used to actuate the brakes.

In the event an electrical and hydraulic failure of the boost valve 48, the fail-safe valve 102 is provided as an alternative means for supplying hydraulic brake fluid to the vehicle brakes 24a, b, c, and d. Under this condition, the boost valve 48 returns to the de-energized position and is incapable of opening to the apply position to supply the manual pressurized hydraulic brake fluid to the vehicle brakes 24a, b, c, and d from the HPA 44. The fail-safe valve is disposed between fluid circuit 72 and fluid circuit 49. As the pressurized hydraulic brake fluid of fluid circuit 72 reaches a second predetermined threshold pressure, the fail-safe valve 102 opens allowing pressurized hydraulic brake fluid of circuit 72 to flow to fluid circuit 49 and to actuate the vehicle brakes 24a, b, c, and d, as discussed *supra*.

In the event a hydraulic failure occurs such as a leak within a fluid circuit (e.g., fluid circuit 49) making the boost assist operation inoperable, a manual push through operation may be used to brake the front vehicle brakes 24c and 24d. Significant leakage of hydraulic brake fluid within a boost assist circuit of the brake module 23 (e.g., circuit 49) may lead to inadequate pressurization of the hydraulic brake fluid during normal boost conditions (including manual braking utilizing the fail-safe valve 102). In such an event, the rear vehicle brakes 24a and 24b will be inoperable. To provide a back-up fail-safe condition for stopping the vehicle under such conditions, the driver of the vehicle may manually push through each respective piston of the master cylinder 22 for actuating front vehicle brakes 24a and 24b. Since front vehicle brake 24c and 24d operates on a separate circuit 67 and 68, respectively, one of the vehicle brakes will continue to be operable should the other become inoperable. In conventional braking systems, for a respective force exerted on a brake pedal, the pressure exerted on the vehicle brakes will be proportional to the exerted force on the brake pedal. If a brake circuit becomes inoperable in a conventional system, an incremental amount of force exerted on the brake pedal is required to generate an incremental amount of pressure on the vehicle brakes for compensating for the lost circuit. In the present invention, if a loss of a one of the brake circuit occurs, a same braking force (i.e., used to brake four vehicle brake actuators) will produce a higher pressure on the operable brake actuators. For example, if a leak occurs in circuit 49 which results in the loss of the rear brake actuators 24a and 24b, a same braking force exerted on the brake pedal used to brake vehicle brakes 24a-d will produce a higher pressure exerted on vehicle brakes 24a and 24b. As a result, the master cylinder 22 compensates for the loss of the brake circuit so that a same braking force exerted on the brake pedal will generate a higher pressure on the operable front brake actuators.

Detecting whether a leak is present in the hydraulic braking system is typically determined by the level of brake fluid in the reservoir 45. A fluid level switch 104 adapted to the reservoir 45 is utilized for determining whether a low level brake fluid condition is present. If the fluid level switch 104 indicates that the brake fluid is low, a warning is provided to the operator of the vehicle indicating that the braking system should be checked for service. However, if an operator senses a normal brake pedal feedback for a respective brake actuation, the operator might ignore the warning indicator not realizing the severity of the present condition.

In conventional braking systems, a direct pressure applied to the brake pedal 38 exerts a force on one or more pistons within the master cylinder which forces hydraulic brake fluid through brake circuits to a plurality of vehicle brakes. A resistive force of the hydraulic brake fluid in the braking circuits provides direct pedal feedback in the conventional braking system. During a condition where a leak is present in a conventional braking system, in addition to the warning light requiring service, an operator may feel a non-typical feedback resistance from the brake pedal (e.g., spongy brakes) thereby raising the operators awareness that the braking system requires servicing. However, in the braking system of the present invention, the pedal simulator may not apply a same resistance feedback from the brake pedal as that of the convention braking system. The resistive force applied against the brake pedal 38 in the present invention is the result of the primary piston 26 within the master cylinder 22 pressurizing hydraulic brake fluid against the simulator piston 80, which inturn, exerts a force and compresses a simulator spring 82. The pressure feedback as applied by the pedal simulator 74 is based on what the expected pressure should be for a respective pedal displacement as sensed by a travel sensor in cooperation with other pressure sensors in comparison to a direct pressure feedback of the conventional braking system. As a result, the pedal simulator may not provide the same resistive braking force feedback as that of a conventional braking system. A driver may acknowledge the warning light but if the resistance force of the brake pedal feels normal to the operator, the operator may assume that immediate servicing is not necessary.

To better assist the operator in determining that a brake failure is occurring which requires immediate attention, a secondary warning is provided to the operator. Additional sensors could be added to the braking system to detect the leak, however additional sensors are costly and may not be feasible to implement in the present invention. For example, a pressure differential switch may be disposed between both fluid circuits of the front vehicle brakes. A large pressure differential between the two brake circuits would signify that a leak is occurring in one of the brake circuits. However, since the pressure differential switch would need to be disposed between a respective proportion valve (or isolation valve) and a respective vehicle brake, the pressure differential switch would be subject to rapid pressure differences generated when the braking system is applying anti-lock braking. Such pressure differences would result in false warnings.

To determine whether a hydraulic brake fluid leak is present in the system without adding additional sensors to the system, a determination can be made based on a predetermined amount of flow rate provided to the braking system during a braking condition. In a preferred embodiment, a flux switching brushless motor is used to drive a pump. The motor self-monitors its speed. Based on the operating speed of the motor, a determination can be made as to the flow rate of the hydraulic brake fluid as output by the pump. A correlation is made based on the flowrate of the hydraulic brake fluid output by the pump as determined by the speed of the motor and the amount of hydraulic brake fluid used by the braking circuits (e.g., amount of brake fluid discharged by the reservoir). A ratio greater than a predetermined threshold given the respective braking condition (e.g., high pressure braking or low pressure braking as detected by the travel sensor) determines whether a leak is present in the braking system. In another preferred embodiment, a conventional motor (e.g., motor with brushes) is utilized. The flow rate of hydraulic brake fluid as output by the pump is determined by the current draw of the conventional motor. In a yet another preferred embodiment, the flow rate of hydraulic fluid flowing to the boost valve may be determined by how often the high pressure accumulator is recharged.

Any significant leakage within a respective fluid circuit of the hydraulic braking fluid supply circuit will result in a loss of hydraulic brake fluid pressure within the primary chamber 70 of the master cylinder 22 as the primary piston 26 attempts to compress the hydraulic brake fluid. Both hydraulic boost function as well as manual braking will fail to pressurize the braking system due to the significant leakage. To apply manual push through for braking the front vehicle brakes 24c and 24d, the driver exerts a longer travel on the brake pedal 38. The longer travel displaces the primary piston beyond the range used during normal boost operation. The second end surface 118 of the primary piston 26 contacts and displaces the first intermediate piston 28 and the second intermediate piston 30. Thereafter the first and second intermediate pistons 28 and 30 displace the first and second secondary pistons 32 and 34. As the first and second secondary pistons 32 and 34 are displaced, brake fluid within the first and second secondary chambers 64 and 66 is pressurized, thereby exerting a force for actuating the front vehicle brakes 24c and 24d.

In the event leakage occurs in the one of the secondary chambers resulting in loss of hydraulic fluid in a respective secondary chamber, one of the front respective vehicle brakes may be used for braking since both front vehicle brakes are independently actuatable. Manual braking will be available for the rear vehicle brakes 24a and 24b and for the respective front vehicle brake that maintains its hydraulic brake fluid.

Various secondary braking strategies may be executed or cooperatively executed by the brake system 21 such as regenerative braking systems, anti-lock braking systems (ABS), traction control, coordinated vehicle stability control, hill hold, automated collision avoidance, or automated cruise control. Thus, it may be desired to actuate one or more of the vehicle brakes 24a, b, c, and d for these purposes even when the vehicle driver is not depressing the brake pedal 38. Similarly, it may be desired to temporarily decrease the braking force of one or more of the vehicle brakes 24a, b, c, and d, individually or in cooperation, such as for the purposes of antilock braking even if the operator is depressing the brake pedal 38.

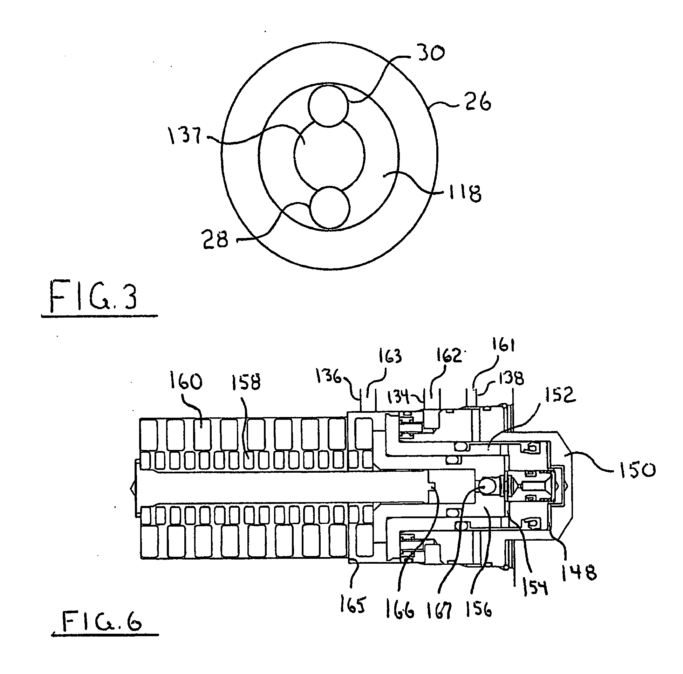

Fig. 3 illustrates a cross section view of a portion of the master cylinder taken at plane A-A in the direction as shown in Fig. 2. The cross section view A-A illustrates the alignment between the primary piston 26 and the first intermediate piston 28 and second intermediate piston 30 (less housings and other elements). The second end surface of the primary piston is shown generally at 118. As discussed earlier, the primary piston is annular and includes a uniform inner bore 137 therethrough for receiving a spring (not shown). The first intermediate piston 28 and second intermediate piston are aligned such that the end surfaces 120 and 122 (shown in Fig. 2) align with second end surface 118 of the primary piston.

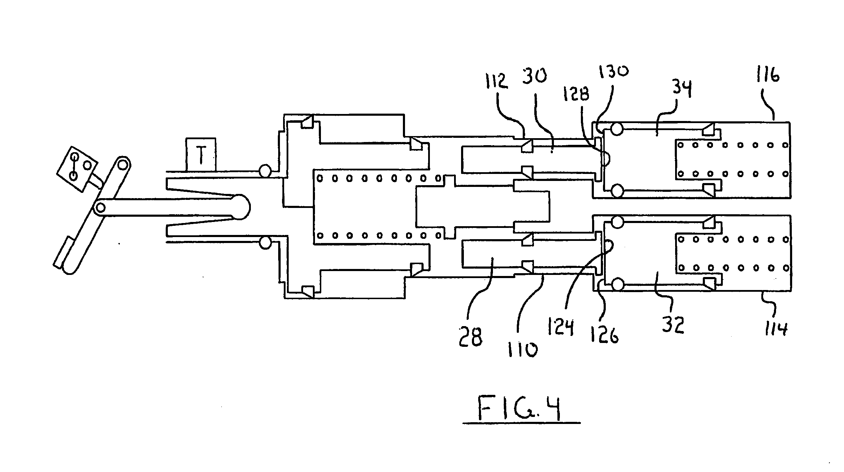

Fig. 4 illustrates an enlargement of a master cylinder according to a second preferred embodiment of the present invention. Using same element numbers as described in Fig. 2 for like references, the master cylinder as shown is the same except for the alignment between the first and second secondary pistons 32 and 34 and the second and third intermediate pistons 28 and 30. The first and second secondary housings 114 and 116 are axially aligned with the second and third intermediate housings 110 and 112, respectively, as opposed to the axial offset housings as illustrated in Fig 2. The axial alignment provides the advantage of reducing side loading on either of the secondary pistons 32 and 34 as the second and third intermediate chambers 60 and 62 are pressurized.

The secondary housings as shown in Fig. 2 are offset (i.e., not axially aligned with the second and third intermediate housings). Having the secondary housings offset as shown in Fig. 2 allows the second and third intermediate housings 110 and 112 to be closer in proximity to one another since the each are not axially aligned with a respective secondary chamber. As a result of the second and third intermediate chambers 110 and 112 being closer to one another, the diameter of the primary piston 26 may be reduced for contacting the first and second intermediate pistons disposed therein. The advantage of reducing the diameter of the primary piston 26 increases the efficiency between the input force and output force of the primary piston 26.

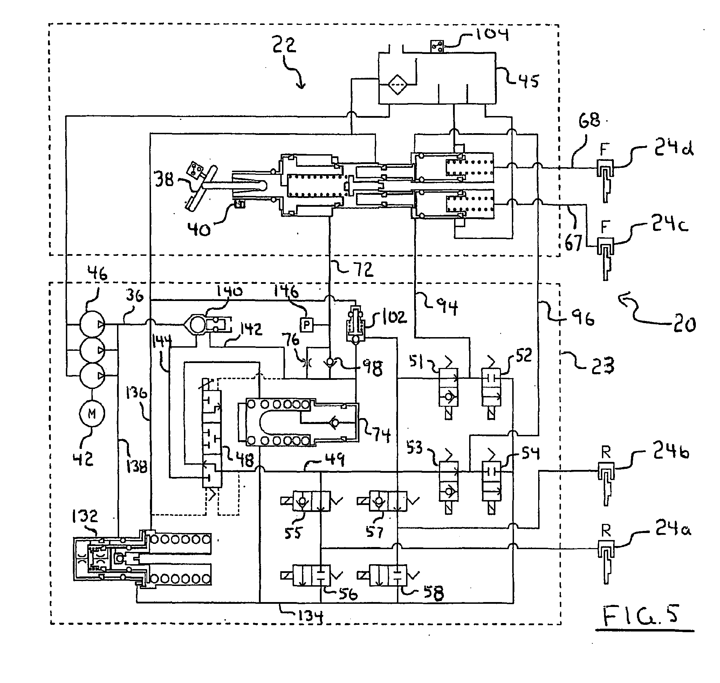

Fig. 5 illustrates a third preferred embodiment of a vehicle brake system indicated generally at 20, in accordance with the invention. Using same element numbers as described in Fig. 1 for like references, the HPA (as shown in Fig. 1) is replaced by a medium pressure accumulator (MPA) 132 with high pressure storage capability. The MPA 132 is in fluid communication with a source of pressurized brake fluid (i.e., pump 46 operated by electric motor 42) and fluid circuit 134. The MPA is also in fluid communication with the reservoir via fluid circuit 138.

As may also be seen in Fig. 6, the MPA 132 is a dual chamber accumulator that allows the accumulation of medium pressurized hydraulic brake fluid in a first (medium) pressure chamber 148 and highly pressurized hydraulic brake fluid in a second (high) pressure chamber 154 chamber.

The MPA 132 includes a pair of spring-loaded pistons as opposed to utilizing a nitrogen pre-charge in cooperation with the piston-type accumulator. The medium pressure chamber 148 is disposed between a housing 150 and a top surface of a medium pressure accumulator piston 152. An edge surface 165 restricts the travel of the medium pressure accumulator piston after a predetermined amount of travel.

A high pressure chamber is shown generally at 154. The high pressure chamber 154 is disposed between a bottom surface of the medium pressure accumulator piston 154 and a top surface of high pressure accumulator piston 156. A first spring 158 and a second spring 160 are disposed below a bottom surface of the high pressure accumulator piston 156. Alternatively, a single spring having a high gauge thickness may be utilized having a same spring force as the combined compression force of the first and second spring 158 and 160.

A first port 161 is coupled to fluid circuit 138 for supplying pressurized hydraulic brake fluid to the MPA 132. A second port 162 is coupled to fluid circuit 134 for returning pressurized brake fluid from the vehicle brakes to the MPA 132. A third port 163 is coupled to fluid circuit 136 for returning pressurized brake fluid to the reservoir 45. The functionality of the bypass valve 88 (as shown in Fig. 1) is integrated within the MPA 132.

When low pressurized brake fluid is provided from the pump 46 (shown in Fig. 5) to the MPA 132, valves are opened to allow the low pressurized brake fluid to enter medium pressure accumulator chamber 148. The low pressurized brake fluid entering the medium pressure accumulator chamber 148 exerts a force on the medium pressure accumulator piston 152 which compresses the first and second spring 158 and 160 until the edge surface 164 of the medium pressure accumulator piston 152 abuts a stepped surface 165 within the MPA 132. The medium pressure accumulator piston 152 is prevented from compressing the first and second spring 158 and 160 further. As the pump 46 provides high pressurized brake fluid to the MPA 132, valves close which allow high pressurized fluid to enter the high pressure chamber 154. The first and second spring 158 and 160 compress further thereby advancing the high pressure accumulator piston 156. High pressure brake fluid will accumulate in the high pressure accumulator chamber 154 thereby displacing the high pressure accumulator piston 156 and further compress the first and second spring 158 and 160. If the high pressure accumulator chamber 154 becomes overpressurized, the high pressure accumulator piston 156 reaches a limit stop 166 which unseats a check valve ball 167 within the high pressure accumulator piston 167 thereby releasing the overpressurized brake fluid within the high pressure chamber to the reservoir 45 via the third port 163.

As stated earlier, under moderate flow boost conditions, hydraulic brake fluid is allowed to accumulate in the first chamber under a medium pressure. When the first chamber is filled to capacity, extra travel of a second spring loaded piston allows hydraulic brake fluid to be stored in the second chamber which is pressurized at a higher pressure in comparison to the first chamber. The MPA 132 is capable of switching pump output between the medium and high pressure chambers. The high pressure within the second chamber can be used to provide sudden ABS isolation valve flow demands.

Referring to Fig. 5, the pedal simulator is in fluid communication with the MPA 132 via fluid circuit 134 and dump valves 52, 54, 56, and 58 for accumulating hydraulic brake fluid discharged by these devices. Fluid circuit 136 is fluidically connected between the HPA 132 and the reservoir 45 for venting pressurized hydraulic brake fluid to the reservoir 45 should the first chamber and the second chamber of the MPA 132 become capacitized.

When boost is required, boost valve 48 is energized to allow hydraulic pressurized fluid flow from the MPA 132. During operation of the pump 46, if the flow rate from the pump is high, the MPA 132 includes a restriction mechanism which restricts pressurized hydraulic brake fluid from entering the first chamber so that high pressurized brake fluid is applied to the respective braking circuits as opposed to accumulating in the first chamber. If pressurized hydraulic brake fluid stored in the MPA 132 is used to actuate the respective vehicle brakes, then pressurized hydraulic brake fluid is allowed to flow through fluid circuit 138 to the boost valve 48 via a shuttle valve 140. Fluid circuit 144 is connected via the shuttle valve 140 to the boost valve 48 and fluid circuit 142 connects the shuttle valve 140 to the driver applied pressure in the pedal simulator 74. The ball within the shuttle valve 140 shuttles from a first position to a second position to fluidically connect a respective pair of fluid circuits while preventing hydraulic brake fluid flow to a third respective fluid circuit. For example, when a higher pressure of hydraulic brake fluid is exerted from the MPA 132 (or pump 46) in comparison to the primary chamber 70 of the master cylinder 22, the ball within the shuttle valve 140 shuttles to a first position to allow hydraulic brake fluid to flow from the MPA 132 (or pump 46) to the boost valve 48 while hydraulic brake fluid is prevented from flowing to the primary chamber 70. When the pressure is higher from the primary chamber 70 as compared to the MPA 132 (or pump 46), the ball in the shuttle valve 140 shuttles to the second position to allow hydraulic brake fluid to flow from the primary chamber 70 to the boost valve 48 while preventing hydraulic brake fluid flow to the MPA 132. The shuttle valve 140 as well as the bleed valve 105 of Fig. 1, includes a provision for being manually opened. Prior to filling the brake system with braking fluid at the assembly plant, solenoid valves are commonly required to be energized while air is evacuated from the conduits. The shuttle valve 140 is held in the open position to allow each brake system 20 to be purged of air without having to energize any of the valves.

In the event the driver applies an immediate large force to the brake pedal 38, it is desirable to have the brake apply pressure from the boost valve 48 upstream of the isolation valves greater than the driver's available manual push through pressure to prevent unwanted pedal drop. If pressurized hydraulic brake fluid from the high pressure chamber of the MPA 132 is used to actuate the vehicle brakes, fluid circuits 136, 138, and 49 are pressurized instantaneously to provide boost function. This is typical of most HPAs. However, when the medium pressure chamber of the MPA 132 is used for supplying the pressurized hydraulic brake fluid to the boost valve 48, a delay is present before the pump can deliver the desired high pressure. As a result, the driver may possibly apply manual braking before the respective brake circuits are fully pressurized by the medium pressure chamber of the MPA 132 for vehicle brake actuation. To prevent the driver from manual braking the vehicle brakes before the MPA 132 supplies the boost function, the dampening orifice 76 is connected upstream of the fail-safe valve 102. The restricted flow of pressurized hydraulic brake fluid through the dampening orifice 76 upstream of the fail-safe valve 102 provides a delay in the pressure increase required to open the fail-safe valve 102. The delay causes the hydraulic pressurized brake fluid supplied by the medium chamber of the MPA 132 to be sufficient to prevent manual braking while the pump is allowed sufficient time to deliver the required output flow to generate high pressure.

Since the dampening orifice 76 is connected upstream of the fail-safe valve 102, the flow of pressurized hydraulic fluid required for manual braking may not be available if the dampening orifice 76 becomes blocked. To identify such a condition, a pressure sensor travel sensor 40 is disposed between the primary chamber 70 and the dampening orifice 76. If the dampening orifice 76 is blocked, the pressure sensor input can be used in conjunction with other sensor inputs (not shown) to the control module to identify the excessive pressure within the primary chamber 70 of the master cylinder 22. A warning such as a visual display, audible display, or other type of warning may be provided to the driver. In addition, if the dampening orifice is blocked, hydraulic brake fluid flow to the boost valve 48 and the fail-safe valve 102 is restricted, thus negating hydraulic actuation of the boost valve 48 or manual braking via the fail-safe valve 102. Furthermore, with the dampening orifice 76 blocked, hydraulic brake fluid within the primary chamber 70 of the master cylinder 22 is incapable of exiting the primary chamber 70. As a result, the primary chamber 70 is in a pressure lock condition and the brake pedal 38 is therefore incapable of being depressed due to the pressure lock condition in the primary chamber 70. Consequently, pedal travel will not occur, and therefore, the travel sensor 40 is incapable of supplying signals to the control module indicative of the driver's demands for braking. The travel sensor 40 is therefore used to sense the pressure exerted within the primary chamber 70 and provide this information to the control module accordingly for applying brake by wire (i.e., electrically controlling the boost valve 48 and the motor 42 for applying hydraulic boost).

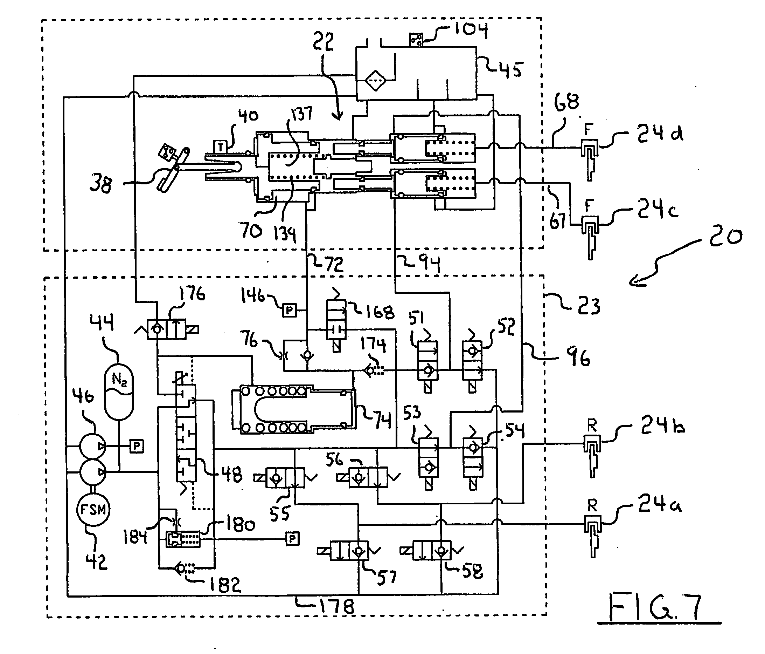

Using same element numbers as described in Fig. 1 for like references Fig. 7 illustrates a schematic of a brake module for a braking system according to a fourth preferred embodiment of the present invention. A master cylinder (M/C) valve 168 is a an electrically actuated valve that is ported normally open when in a de-energized position. The M/C valve 168 is fluidically coupled between the fluid circuit 72 which is in fluid communication with the primary chamber 70 of the master cylinder and the first circuit 49. A pressure sensor 146 is coupled to fluid circuit 72 for monitoring the fluid pressure within fluid circuit 72. A reservoir isolation valve 176 is in fluid communication and disposed between said pedal simulator 74 and the reservoir 176.

A bleed valve 180 includes a spring activated piston to allow the brake system 22 to be purged of entrapped gas. A spring loaded check valve 182 is connected between the pump 46 the first circuit (in parallel with the boost valve 48 and the bleed valve 182).

In this embodiment and similar to the boost function of Fig. 1, when braking is required, the boost valve 48 is energized to allow pressurized brake fluid provided by the HPA 44 and the pump 46 to flow through fluid circuit 49 to actuate vehicle brakes 24a, 24b, 24c, and 24d. In the event of an electrical failure, the boost valve 48 will not remain active and will return to a de-energized position thereby applying no boost function from the HPA 44. The boost valve 48 is an electrically actuated boost valve (i.e., as opposed to the hydraulic and electrical actuated boost valve as shown in Fig. 1 and 5). The manual push through operation may be used to brake the front vehicle brakes 24c and 24d and the rear vehicle brakes 24a and 24b in the event of an electrical failure. Manual push through operation for the front vehicle brakes 24c and 24d is the same as discussed in connection with Fig 1. The manual push through operation for the rear vehicle brakes 24a and 24b is manually provided by the operator exerting a force on the brake pedal 14 to pressurize hydraulic fluid in the primary chamber 70 and forcing hydraulic brake fluid via fluid circuit 72 to the M/C isolation valve 168. During hydraulic boost operation, the M/C isolation valve 168 is electrically ported closed to allow hydraulic fluid flow to the pedal simulator 74. During an electrical failure, the M/C isolation valve 168 is de-energized to the open position to allow hydraulic brake fluid to flow to the rear vehicle brakes 24a and 24b. When M/C isolation valve 168 is in the open position, the hydraulic brake fluid is unrestricted while passing through the valve. As a result, no additional pressure is required by the operator of the vehicle to force open the M/C isolation valve 168 as opposed to the failsafe valve 102 (of Fig. 1 and 5) which required additional force exerted on the failsafe valve 102 to overcome the internal spring force to open the ports for allowing hydraulic brake fluid to pass to the vehicle brakes.

When increased hydraulic boost is required for actuating vehicle brakes 24a, 24b, 24c, and 24d, M/C isolation valve 168 is energized to the closed position to allow increased hydraulic pressure to flow to fluid circuit 49 for actuating the vehicle brakes. During periods of high boost when the pressure differential is much greater in circuit 49 in comparison to circuit 72, the M/C isolation valve 168 is hydraulically locked shut due to the large pressure differential. Under this condition, should the hydraulic boost pressure become too low and manual push is required, the operator exerts a force on the brake pedal 38 to overcome both the electrically actuated closed M/C isolation valve 168 and the residual boost pressure still present within circuit 49. To minimize this manual push through restriction, the M/C isolation valve 168 is de-energized. Though M/C isolation valve 168 is de-energized, M/C isolation valve 168 may remain closed so long as the pressure differential is large enough between fluid circuit 49 and fluid circuit 72 to maintain the hydraulically locked condition. Should the boost pressure decrease when manual push through is required, the operator needs only to exert a brake pedal force to overcome the pressure differential (hydraulic lock condition) as opposed to the hydraulically locked condition and the energized closed M/C isolation valve 168. Furthermore, the M/C isolation valve 168 is disposed between the primary chamber 70 and the pedal simulator 74 upstream of the dampening orifice 76. Unlike the failsafe valve 102 (of Fig. 5) which is located downstream of the dampening orifice 76, the flow of pressurized brake fluid from the primary chamber 70 to the M/C isolation valve 168 is not restricted by the dampening orifice 76.

When the operator suddenly exerts a large braking force on the brake pedal 38, it is undetermined whether the driver is exerting the large braking force to momentarily brake the vehicle and quickly release the brakes or if the driver intends to maintain the large braking force to bring the vehicle to a halt. Under both conditions, hydraulic boost quickly builds pressure to actuate vehicle brakes 24a, b, c, and d. While the boost valve 48 is energized open to allow the pump 46 and the HPA 44 to increase pressure in fluid circuit 49 for vehicle brake actuation, the master cylinder primary flow rates from primary chamber 70 via fluid circuit 72 may be larger than the boost pressure in fluid circuit 49. Under these conditions, the pressure differential between fluid circuit 72 and fluid circuit 49 may force M/C isolation valve 168 open. To prevent M/C isolation valve 168 from opening under such conditions, M/C isolation valve 168 is fully energized closed to prevent momentary pressure increases within fluid circuit 49 from opening the valve.

To minimize energy consumption of M/C isolation valve 168, M/C isolation valve 168 is current limited depending upon the hydraulic brake fluid flow rate. That is, when M/C isolation valve 168 is energized closed, under low flow rates, current supplied to the M/C isolation valve 168 may be decreased proportionally to the flow rate since only a low amount of energy is required to maintain the closed position. Alternatively, if high flow rates are expected within the respective fluid circuits, current supplied to the M/C isolation valve 168 may be increased proportionally since a higher amount of energy is required to overcome the increasing pressure on the M/C isolation valve 168 to maintain the closed position.

A travel sensor 40 is primarily used to determine drivers braking intent. Pedal travel may not provide accurate information regarding the drivers braking demands when a large braking force is applied. For example, when an initial force is applied to the brake pedal 38, the brake pedal 38 may travel a substantial distance, however, the increase in the M/C primary pressure may be minimal. Alternatively when a large force is applied to the brake pedal 38 and the force exerted on the brake pedal 38 is slowly decreased, the brake pedal travel may decrease by a small distance but the pedal force may decrease substantially. To better correlate the boost pressure and the pedal travel, the pressure sensor 146 is used to measure the pressure within fluid circuit 72 to assist in verifying braking demands. For example, when the initial force is applied to the brake pedal 38, the travel sensor 40 is a more accurate indicator for determining the driver's braking demands. When the large force is applied and decreased to the brake pedal 38, pressure measured by the pressure sensor 146 is the more accurate indicator than the travel sensor 14 under this condition since the a large decrease in the braking force may be the result of the brake pedal 38 traveling only a small distance. As a result, the pressure measured by the pressure sensor 146 is used in cooperation with the travel sensor 40 for determining driver's braking demands under brake modulation such that boost pressure apply will be limited until a signal for the pressure sensor 146 confirms the travel sensor output. In all instances, boost pressure can limited to the wheel lock pressure since there is no added advantage in maintaining boost pressure higher than what is required for a wheel lock condition.

The travel sensor 40 may also be used to determine the flow rate of the supplied hydraulic brake fluid from the master cylinder 22. This flow rate can be used to estimate pressure upstream of the pedal dampening orifice 76 and the master cylinder isolation valve 168 in conjunction with the signal from the pressure sensor 146. This provides an indication of the expected flow rate for determining the closing force required when energizing the M/C isolation valve 168.

The spring loaded check valve 174 is provided for allowing manual push through in the event M/C isolation valve 168 becomes blocked or is unable to de-energize to an open position. The spring loaded check valve 174 is sized so that it will not open prior to the normal operation (de-energizing) of the M/C isolation valve 168. To assist in not opening before the M/C isolation valve 168 is de-energized open, the dampening orifice 76 is disposed after the M/C isolation valve 168 but before the spring loaded check valve 174. The dampening orifice 76 restricts the flow of hydraulic brake fluid so that higher pressures of hydraulic brake fluid are seen at the M/C isolation valve 168 than at the spring loaded check valve 174. Furthermore, as discussed earlier, the brake system 20 isolates the driver during various secondary braking conditions such as regenerative braking, to permit efficient push through if the boosted pressure is unacceptably low when the driver's input pressure indicates that the regenerative braking should have been terminated. Furthermore, the brake system 20 preferably does not allow manual push through, in certain instances for example, where the master cylinder pressure is high and the regenerative braking pressure is low, thereby allowing the boost operation to seamlessly transition into the vehicle braking operation as opposed to manual push through. The spring loaded check valve 174 is properly sized to not allow manual push through during this and other advanced braking control schemes where the pressure is lower in the boost side than on the master cylinder side.

The reservoir isolation valve 176 is a normally closed valve that redirects the flow of pressurized fluid from the pedal simulator 74 or from the boost valve 48 via fluid circuit 90 to the reservoir 45 which is vented at atmospheric pressure for storing hydraulic brake fluid. The reservoir isolation valve 176 permits the manual push through of hydraulic brake fluid to the rear brakes while preventing lost brake pedal travel to the pedal simulator 74. Reservoir isolation valve 176 is an electrically actuated valve that is ported normally closed when in a de-energized position. Similar to M/C isolation valve 168, the reservoir isolation valve 176 is current limited depending upon the hydraulic brake fluid flow rate for conserving energy. Under high flow rates, the reservoir isolation valve 176 will be fully energized using a large current draw to prevent the flow forces of the pressurized hydraulic brake fluid returning from the boost valve 48 or pedal simulator 74 from closing the valve. In low flow conditions, the reservoir isolation valve 176 will be energized using smaller current draws to maintain an open valve due to the low forces exerted on the reservoir isolation valve 176.

Return hydraulic brake fluid flow from the dump valves 52, 54, 56 and 58 are directed back to the reservoir via fluid circuit 178. The return of hydraulic brake fluid from the respective dump valves directly to the reservoir 45 as opposed to directing the hydraulic brake fluid to the pedal simulator 74 (as shown in Fig. 1) has the advantage of reducing the pulsation feedback the driver may feel when secondary brake assist functions are used such as ABS. This allows the pressurized hydraulic brake fluid to flow back to reservoir 45 which is primarily unrestricted for the returning brake fluid. Another advantage of returning hydraulic brake fluid via fluid circuit 178 is that this circuit actually draws the brake fluid from the dump valves 52, 54, 56, 58. Fluid circuit 178 in addition to being a return line to the reservoir 45 provides fluid to the pump 46 when the motor 42 and pump 46 are operating for supplying boost pressure or filling the HPA 44. If hydraulic brake fluid is released from the dump valves 52, 54, 56, 58 while the pump 46 is still operating, the pump 46 functions as a vacuum on hydraulic brake fluid entering the pump 46. The vacuum created by the pump 46 draws hydraulic brake fluid from the dump valves 52, 54, 56, 58 at a faster rate than had the pump 46 not been operating.

Prior to filling the braking system with braking fluid at the assembly plant, solenoid valves are commonly required to be energized while air is evacuated from the conduits. The bleed valve 180 is held in the open position by a spring to allow the brake module 22 to be purged of air without having to energize any of the valves. Once the brake module 22 is purged of air and the braking system is activated, low pump fluid flow closes the bleed valve 180 and low pressure maintains the bleed valve 180 in a closed position. When in a closed position, the brake fluid is prevented from bypassing the boost valve 48 via the bleed valve 180.

In the event the boost valve 48 becomes blocked or is inoperable while the pump 46 and the HPA 44 are active, or if the HPA 44 is exceeding a predetermined high pressure and the vehicle brakes have not been actuated for releasing brake fluid from the HPA 44, the spring loaded check valve 182 is provided to release the highly pressurized brake fluid stored in the HPA 44. Such a condition may occur when hydraulic brake fluid stored in the HPA 44 exceeds the predetermined high pressure by driving a vehicle without braking. Elevated engine compartment temperatures could increase the pressure of the hydraulic brake fluid in the HPA 44 thereby causing the overpressurized condition within HPA 44. The spring loaded check valve 182 is provided between the pump 46 and isolation valves 51, 53, 55, and 57 (in parallel with the boost valve) to relieve the HPA 44 of the overpressurized condition. The spring loaded check valve 182 opens when the pressurized brake fluid stored in the HPA 44 has a pressure greater than the combination of the pressure of fluid circuit 49 and the spring force of the check valve spring. Alternatively, both the spring loaded check valve 182 and the bleed valve 180 may be disposed in parallel to one another between the pump 46 and the reservoir 45 so as to vent the hydraulic brake fluid to the reservoir 45 via fluid circuit 178.

The pedal simulator 74 as discussed earlier exerts an opposing force on fluid circuit 72 for providing a resistive force indirectly against the vehicle brake pedal 38 for simulating braking feedback in the brake pedal 38. Pedal simulators in general are sized for respective vehicles based on the requirements of the braking system. As a result, various vehicle applications require various sized simulator modules utilizing different sized simulator pistons. A simulator piston having a respective outer diameter utilizes a simulator sleeve sized to accommodate the simulator piston. To alleviate the need for redesigning an entirely new HCU (i.e., head control unit) based on a sizing requirement for a respective vehicle application, a modular pedal simulator may be utilized for all vehicle applications. The modular pedal simulator includes a universal valve body utilized for each vehicle application. The universal valve body remains unchanged regardless of the piston size. The internal dimensions (i.e., inner diameter) of the simulator sleeve is changed to accommodate the various sized pistons, however, exterior dimensions of the simulator sleeve including the exterior dimensions (e.g., outer diameter) of the modular pedal simulator remain the same. As a result, for a respective vehicle application that requires a specific sized simulator piston, a modular pedal simulator is fitted with the specific sized simulator piston and sleeve and is adapted to the universal valve body for accommodating various vehicle applications.

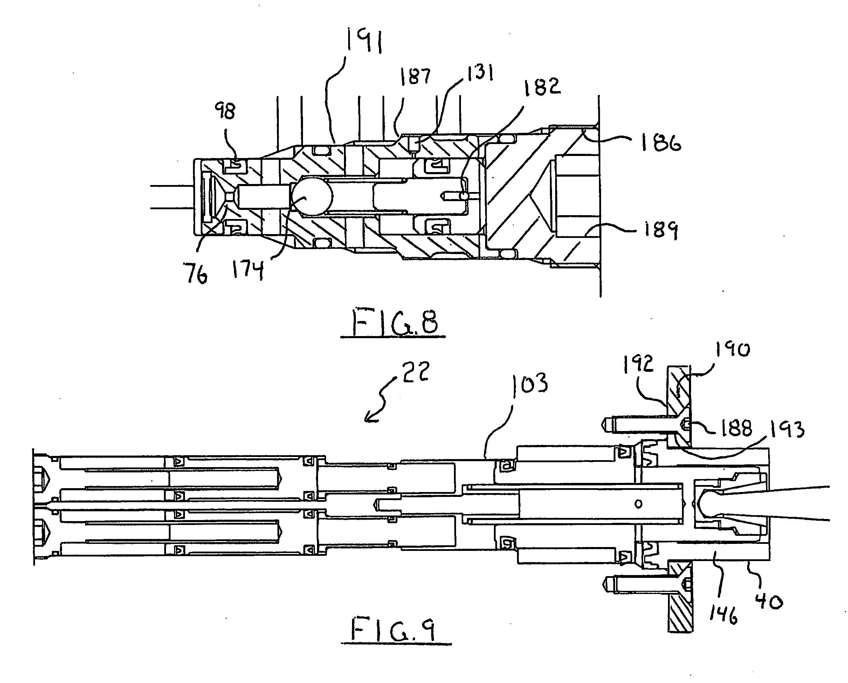

Fig. 8 is cross sectional view of a multi-function valve shown in Fig. 7. Although a majority of the valves discussed for the hydraulic schematic in Fig. 7 are shown separate and distinct, the multifunction valve integrates and performs multiple functions of a plurality of valves. The multifunction valve includes the dampening orifice 76 for the restriction of hydraulic brake fluid flow to the pedal simulator 74 (shown in Fig. 7). The check valve 98 functionality is integrated for allowing return flow of hydraulic brake fluid from the pedal simulator 74 when the pressure differential is lower on the master cylinder 22 side of check valve 98 in comparison to the opposite side. The spring loaded check valve for allowing manual push through in the event M/C isolation valve 168 is blocked or inoperable, is shown at 174. The restriction orifice 184 and bleed valve 180 of Fig. 7 are shown generally at 131 in Fig. 6. Furthermore, the spring loaded check valve (i.e., emergency relief valve) for relieving overpressurized brake fluid stored in the HPA 44 is shown at 182.

A manual relief valve 187 is shown in Fig. 6 for manually relieving pressure in the HPA 44 in the event of an electrical failure. In Figs. 1 and 3, if an electrical failure is present, hydraulic brake fluid could be bled from the HPA 44 by pumping the brakes since the boost valve 48 could be hydraulically actuated for porting the boost valve to release brake fluid from the HPA 44. The boost valve 48 of Fig. 6 is not designed to be hydraulically actuated in the event of an electrical failure. To manually relieve pressure, the multi-function valve includes a front portion 189 that includes a threaded portion 186. As the front portion 189 is rotated thereby about the threads, the manual relieve valve 187 creates an opening between the multi-function valve and a multifunction valve housing 191 for bleeding brake fluid from the HPA 44.

Fig. 9 is an enlargement of a master cylinder according to a fifth preferred embodiment of the present invention. As discussed in earlier embodiments, the brake pedal 38 is coupled to a pedal displacement transducer for producing a signal that is indicative of the length of travel of the brake pedal 38. In this preferred embodiment, the master cylinder 22 includes the travel sensor 40 that inductively senses the travel of the primary piston 26 of the master cylinder 22. The travel sensor 40 includes an inductive coil 170 that surrounds a portion of the primary piston 26 for inducing a high frequency current on a top surface of the primary piston 26. Eddy currents produced by the inductive field run along the top surface of the primary piston 26. As a force is exerted on the brake pedal 38, the primary piston 26 is displaced within the master cylinder housing 103. The inductive coil 170 measures the change of eddy currents on the top surface of the primary piston 26 for determining the exact location of the primary piston 26, and as a result, allows the system to determine the length of travel of the brake pedal 38.

Fig. 9 further illustrates a universal mounting system for mounting the master cylinder 22 within a vehicle engine compartment (not shown). An adaptive face mounting plate 190 includes a first aperture for receiving the master cylinder 22. The adaptive face mounting plate 190 further includes a plurality of apertures 195 for receiving a plurality of fasteners 188. The plurality of fasteners 188 is shown to secure the master cylinder 22 to a mounting surface 192 using the adaptive face mounting plate 190. Once the plurality of fasteners are secured, the adaptive face mounting plate 190 retains the travel sensor 40 and other associated components of the master cylinder 22 assembled from the adaptive mounting plate side of the master cylinder housing. Different vehicles may require various shaped face mounting plates due to various packaging locations and the surrounding components of a respective vehicle engine compartment. In this embodiment, the plurality of apertures 195 aligned with the mounting surface 192 are fixed between the fastener hole location of the engine compartment and the plurality of apertures 195 for receiving the master cylinder 22. As a result, the master cylinder 22 may utilize a variety of various shaped face mounting plates for adapting the master cylinder 22 to various mounting locations and surfaces of the vehicle. Furthermore, all connections to the master cylinder 22 and the travel sensor 40 are accessible from the engine compartment of a vehicle.

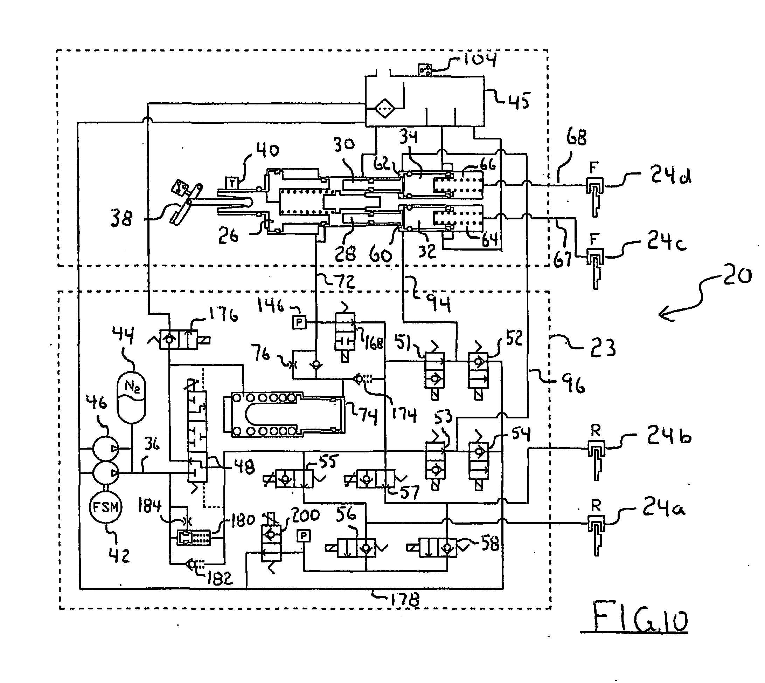

Fig. 10 illustrates a sixth preferred embodiment of a brake module in accordance with the invention. It is desirable for vehicles having independent front and rear axle brake control requirements to apply different pressures to the front and rear axle. This can be accomplished by reducing the pressure applied to one axle relative to the other axle. Pressure reduction for a respective vehicle axle requires that both vehicle brakes on the respective axle have braking force applied at a substantially same pressure. Applying a substantially even braking force for a respective set of brakes of a respective axle requires that a same amount of flow rate of pressurized brake fluid is applied to each respective brake assuming that external factors are consistent between each respective wheel such as brake stiffness and pad friction.

Regenerative braking is typically applied to one of the respective axles of a vehicle for energy recapture by simultaneously reducing pressure while exerting an electromagnetic resistive force to the axle. During periods of braking when regenerative braking is applied to a respective axle for maximum recapture of energy, brake blending occurs so that the regenerative braking being applied to the respective axle does not create a torque imbalance between each axle of the vehicle. Too much wheel torque in a respective region of the vehicle leads to a wheel slip condition. As a result, a balance is maintained between recapture energy and balanced braking. Brake balance becomes more complex under conditions when a respective slip control is applied such as anti-lock braking. Under such conditions, each respective vehicle brake of the non-regenerative braking axle is controlled by a respective isolation valve and a respective dump valve for supplying, maintaining, or relieving pressure from the respective brake. The respective isolation valves are two-position valves (i.e., fully opened or fully closed). Due to the pulsing of the isolation valves during anti-lock braking, different flow rates may be generated within each vehicle brake circuit, and as a result, an unbalanced braking force may be applied to each respective wheel for the respective axle.

In this preferred embodiment, to apply a balance flow rate of pressurized brake fluid within a set of respective vehicle brakes of the respective axle, isolation valves 55 and 57 include proportional valves. A proportional valve 200 is connected to fluid circuit 198 between dump valves 56 and 58 and fluid circuit 178. The proportional valve 200 is disposed prior to the joint coupling of fluid circuit 198 and fluid circuit 178.

To apply a balanced flow rate of brake fluid to the respective set of brakes on the respective axle, the proportional valves 55 and 57 are adjusted to variably control the amount of pressurized brake fluid to vehicle brakes 24a and 24b, respectively. Dump valves 56 and 58 are held open continuously during balanced proportional pressure control. Each of these valves is pulse width modulated when the release flow rates predict low delta pressures to reduce heating. Dump valves 56 and 58 while in a closed position maintains brake pressure so that pressurized brake fluid from the via the boost valve 48 may be applied to vehicle brakes 24a and 24b. Dump valves 56 and 58 when in the open position allows brake fluid to be relieved from the respective vehicle brake. An unbalanced pressure in each vehicle brake 24a and 24b is often desirable during periods of anti-lock braking (or other slip control). To balance the brake pressures on the axle, a proportional valve 200 is provided downstream of the dump valves 56 and 58 in fluid circuit 198. The proportional valve 200 is disposed prior to the joint coupling of fluid circuit 198 and fluid circuit 178. As a result, the flow rate from dump valves 52 and 54 in circuit 178 remains unaffected.

Proportional valve 200 controls the flow rate and the volume of pressurized brake fluid exiting the dump valves 56 and 58. The proportional valve 200 is variably adjusted to allow a gradual change in the flow rate of pressurized brake fluid as opposed to an abrupt opening and closing the valve. Furthermore, because the flow rate of pressurized brake fluid exiting the vehicle brakes 24a and 24b is controlled by the dump valves 56 and 58 at high braking pressures, the proportional valve 200 may be sized small. This is due to the proportional valve 200 functioning primarily at low brake pressures even though it is sized with sufficient open area to not restrict flow downstream of both dump valves 56 and 58.

Alternatively, dump valves 56 and 58 may include proportional valves for variably controlling the flow rate of pressurized brake fluid leaving the vehicle brakes 24d and 24c without incorporating proportional valve 200, however, this would add additional cost since a separate normally closed proportional valve design would be required and either a separate pressure balance solenoid valve or an extra pressure transducer would need to be added.

This same circuit can be used for front axle proportional pressure reduction by simple external re-plumbing. The rear brakes 24a and 24b would be connected to the ports between valves 51 and 52, and between valves 53 and 54, respectively. The ports between valves 55 and 56, and between 57 and 58 would be connected to the MC chambers corresponding to front brakes 24c and 24d, respectively.

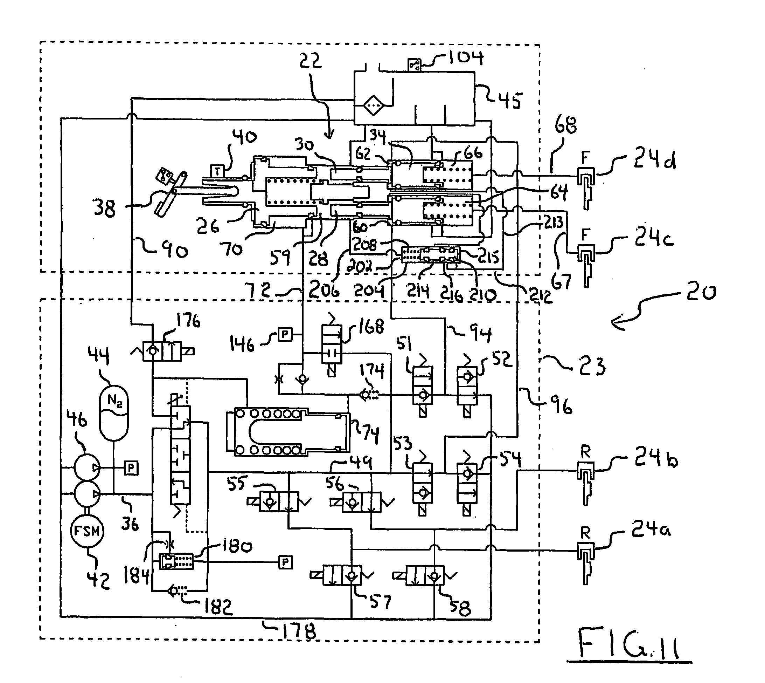

Fig. 11 further illustrates a braking system for purging entrapped gas within the master cylinder 22 according to a seventh preferred embodiment of the present invention. Typically, master cylinder chambers do not require hydro-mechanical or solenoid valves for venting to the reservoir for purging entrapped gas because a vent to the reservoir is provided at the master cylinder chamber. A master cylinder mounted in a vehicle is typically positioned at a higher elevation than a brake module so that the entrapped gas does not naturally flow from the master cylinder to the brake module. However, if the master cylinder and the brake module are mounted in close proximity to one another, gas can flow down to the brake module, and then back up to the master cylinder reservoir via a separate return path. For braking systems where the brake module and the master cylinder are mounted a far distance apart, purging the entrapped gas from the master cylinder to the reservoir via the brake module is more difficult.

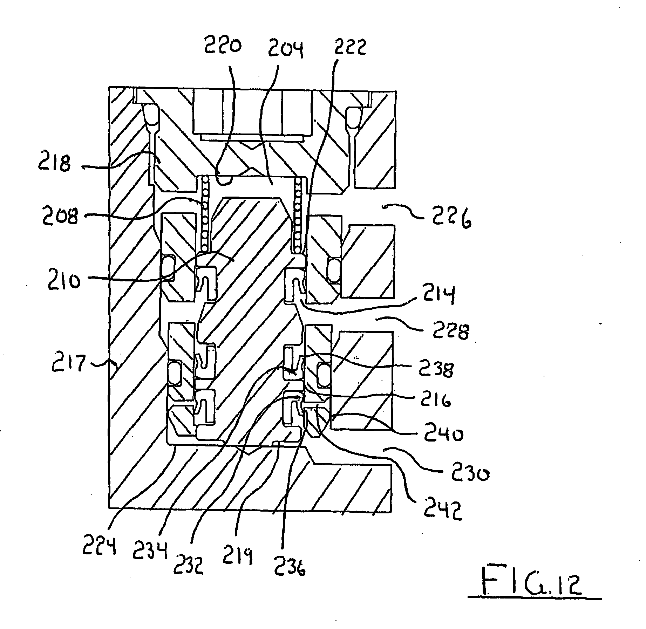

In this embodiment, to purge entrapped gas when the brake module 23 is mounted a far distance from the master cylinder 22, a bleed valve 202 is fluidically connected between the second intermediate chamber 60 via fluid circuit 213 and a third intermediate chamber 62 via fluid circuit 212. The bleed valve 202 is also fluidically connected to the first intermediate chamber 59. As may also be seen in Fig. 12, the bleed valve 202 includes a bleed valve housing 217 that encases a chamber housing 218 and a piston 210. A spring 208 is disposed between a first end 220 of the chamber housing 218 and a first end 222 of the piston 210 for positioning the piston 210 into a preloaded state. The spring 208 maintains the piston 210 at a second end 224 of the chamber housing 218 during non-braking conditions.

A first port 226 allows fluid flow between reservoir 45 via fluid circuit 206 (as shown in Fig. 11) and the first chamber 204 for venting the first chamber 204 to prevent a pressure lock condition when the piston 210 is displaced within the housing. The bleed valve 202 includes a second port 228 in fluid communication with the second and third chamber 214 and 216. The bleed valve further includes and a third port 230 in fluid communication with the third and forth chamber 216 and 219. The third port 230 is also in fluid communication with second chamber 216 via fluid passage 240 and fluid passage 242.

Lip seal 232 includes lip seal leg 236 and lip seal 234 includes lip seal leg 238 and are directionally oriented to allow fluid flow in only one direction (i.e., from the third chamber 216 to the second chamber 214).

When a vehicle is in a non-braking condition, the fluid circuits of the brake module 23 as well as any other secondary braking module have little or no fluid flow and are maintained at low pressures (aside from the fluid circuit 36 between the pump 46, HPA 44, and boost valve 48 which maintains high pressure within the HPA 44). During a non-braking condition, the brake pedal 38 is at a rest position and no braking force is exerted on the primary piston 26 as well as the intermediate and secondary pistons of the master cylinder 22. As a result, pressurized brake fluid within each of the chambers within the master cylinder 22 remains unpressurized. The hydraulic brake fluid within the first intermediate chamber 59 while in an unpressurized state is in equilibrium with the hydraulic brake fluid of a first chamber 204 of the bleed valve 202 via fluid circuit 206. While in the equilibrium, the spring 208 in the bleed valve 202 is maintained in a precompressed state (i.e., precompressed as when inserted within the bleed valve). While in the precompressed state, the spring 208 exerts a force on the piston 210 within the bleed valve 202 which shuttles the piston 210 to an opposing side of a chamber housing within the bleed valve 202. When the piston 210 is shuttled to the opposing side, the piston 210 ports the bleed valve 202 to an open position. There is no resistance force exerted against the piston and spring 208 from the opposing side of the piston 210 since there is no hydraulic boost pressure being applied by the boost valve 48 during a non-braking condition.

To purge entrapped gas within the master cylinder 22, the boost valve 48 is variably opened to allow a very low flow rate of pressurized hydraulic brake fluid to flow to the third intermediate chamber 62 of the master cylinder 22. Normally open M/C isolation valve 168 is energized closed during the bleed mode to allow the low flow rate of pressurized hydraulic brake fluid to flow to the third intermediate chamber 62 of the master cylinder 22 only. Despite the hydraulic brake fluid being highly pressurized in the HPA 44, the boost valve 48 is partially opened so that only a low flow of pressurized hydraulic brake fluid is allowed to flow through the boost valve 48 via fluid circuits 49 and 96 to the third intermediate chamber 62. The low flow rate results in a low pressure increase (e.g., 1 Bar) of hydraulic brake fluid within fluid circuits 49 and 96.

The flow of low pressurized hydraulic brake fluid enters the third intermediate chamber 62 of the master cylinder 22 via fluid circuit 96 and exits the third intermediate chamber 62 via fluid conduit 212. With the bleed valve 202 ported to the open position, the low pressurized brake fluid enters a third chamber 216 via fluid circuit 212. Lip seals (shown in Fig. 12) within the bleed valve 202 control the directional flow of hydraulic brake fluid within the bleed valve 202 from the third chamber 216 to a second chamber 214. The hydraulic brake fluid exits the bleed valve 202 from the second chamber 214 and flows through fluid circuit 213, through the second intermediate chamber 62 of the master cylinder 22, and through fluid circuits 94 and 36 to the reservoir 45. Isolation valve 51 is ported closed and dump valve 52 is ported open to allow the flow of hydraulic brake fluid to the reservoir 45. As the flow of low pressurized hydraulic brake fluid enters and exits the second and third intermediate chamber 60 and 62, the entrapped gas is forced out of these chambers and transported via brake module 23 to the reservoir where the entrapped gas is purged to the reservoir 45.

This purging of the entrapped gas from the master cylinder may be initiated on a periodic basis by having the control module periodically open the boost valve (i.e., under non-braking conditions) to produce a low pressure fluid flow rate within the respective fluid circuits. If hydraulic boost braking is required at any time, the boost valve 48 increases the flow rate of pressurized hydraulic fluid to the master cylinder for providing electro-hydraulic assisted braking. The increased pressure exerted from the boost valve 48 provides pressurized hydraulic brake fluid via fluid circuit 212 to a fourth chamber 219 to shuttle the piston 210 to a closed ported position to prevent the flow of pressurized brake fluid through the bleed valve 202. The bleed valve 202 includes lip seals (shown in Fig. 12) which prevent the flow of hydraulic brake fluid within the bleed valve 202 to flow in both directions. Rather hydraulic braking fluid flow is allowed to flow in only one direction when ported open (i.e., from the third chamber 216 to the second chamber 214).

Fig. 12 illustrates the internal components of the bleed valve 202 and the shuttling of the piston opening and closing the respective chambers. When the piston 210 is shuttled to port the bleed valve 202 to the open position (as shown), low pressurized hydraulic brake fluid generated by the boost valve 48 (shown in Fig. 11) enters the third port 230 and flows through passages 240 and 242 and past lip seal 232 for entering the third chamber 216. Low pressurized brake fluid thereafter flows from the third chamber 216 past lip seal 234 and into the second chamber 214. The hydraulic brake fluid then exits the second chamber 214 of the bleed valve 202 via the second port 228.

Lip seals 232 and 234 maintain a directional flow of hydraulic brake fluid between the second chamber 214 and third chamber 216. The lip seals 232 and 234 are J-shaped as shown. When hydraulic fluid is exerted on lip seal legs 236 and 238 from a respective direction, a respective passageway is opened between each leg and an inner wall of the chamber housing 218. When hydraulic fluid flow is exerted on lip seal legs 236 and 238 from a respective opposing direction, a seal is created between each lip seal leg and an inner wall of the chamber housing 218.

When braking is applied by the driver of the vehicle, pressurized brake fluid is applied by the boost valve 48 to actuate the vehicle brakes as discussed earlier. As boost pressure is applied, hydraulic brake fluid is pressurized in the third intermediary chamber 62 of the master cylinder 22. Fluid is forced through fluid circuit 212 to the third port 230 and into the fourth chamber 219. When the flow of pressurized hydraulic brake fluid increases to overcome the resistive force of the spring 208, the piston 210 shuttles toward the first end 220 of the chamber housing 218. As the piston 210 is shuttled toward the first end 220, lip seal 232 moves above passage 242. The leg 236 of lip seal 232 creates a seal with the inner wall of the chamber housing 218 and any further pressurized hydraulic brake fluid entering the third port 230 is prevented from flowing past the lip seal 232 to the third chamber 216.

Similarly, as boost pressure is applied to the second intermediary chamber 60 of the master cylinder 22 (shown in Fig. 11), pressurized hydraulic brake fluid is forced into the second port 228 through fluid circuit 213 (shown in Fig. 11) and into the second chamber 214 thereafter. The leg 238 of the lip seal 234 creates a seal with the inner wall of the chamber housing 218 and prevents hydraulic brake fluid from flowing past the lip seal 234 from the second chamber 214 to the third chamber 216. As a result, hydraulic brake fluid is prevented from flowing through the bleed valve 202 in either direction when braking is applied. When a non-braking condition is present, the leg 236 of the lip seal 232 is positioned within the bleed valve 202 to allow very low pressure hydraulic brake fluid to flow directionally through the third intermediary chamber to the second intermediary chamber 62 of the master cylinder 22 for purging entrapped gas within the master cylinder 22 to the reservoir 45 via the brake module 23.

## Claims

1. A braking system (20) for applying pressurized hydraulic brake fluid to a plurality of vehicle brakes (11a-d), the braking system (20) comprising:
a master cylinder (22) including a primary piston (26) coupled to a vehicle brake pedal (38) operated by a vehicle driver;
a source (42, 44, 45, 46) of pressurized brake fluid;
a first brake fluid circuit (49);
a boost valve (48) for controlling a flow of brake fluid from said source (42, 44, 45, 46) to said first circuit (49) as a function of the operation of the brake pedal (38);
a first brake actuator (24a) operated by brake fluid from said first circuit (49);
a second brake actuator (24b) operated by brake fluid from said first circuit (49);
a second brake fluid circuit (67);
a third brake actuator (24c) actuated by brake fluid from said second circuit (67);
a third brake fluid circuit (68);
a fourth brake actuator (24d) actuated by brake fluid from said third circuit (68);
**characterized in that** the master cylinder (22) further comprises a first secondary piston (32) and a second secondary piston (34), said first (32) and second (34) secondary pistons each capable of being independently operably displaced by an application of pressurized fluid from said first circuit (49) to pressurize brake fluid in, respectively, said second circuit (67) to operate said third brake actuator (24c) and said third circuit (68) to operate said fourth brake actuator (24d).

2. The braking system of claim 1 wherein said third and fourth brake actuators (24c, 24d) are vehicle front brakes.

3. The braking system of claim 1 or 2 wherein said second circuit (67) is a direct fluid line connection between said master cylinder (22) and said third brake actuator (24c), and said third circuit (68) is a direct fluid line connection between said master cylinder (22) and said fourth brake actuator (24d).

4. The braking system of claim 1 to 3 wherein, in the event of a hydraulic failure of said first circuit (49), said primary piston (26) acts on at least one of said first (32) and second (34) secondary pistons to pressurize at least one of said second (67) and third (68) circuits.

5. The braking system of claim 1 to 4 wherein said first circuit (49) includes a first brake pressure valve arrangement (55, 56; 57, 58) between said boost valve (48) and said first (24a) and second (24b) brake actuators.

6. The braking system of claim 1 to 5 wherein said first circuit (49) includes a second brake pressure valve arrangement (51, 52) between said boost valve (48) and said first secondary piston (32), and a third brake pressure valve arrangement (53, 54) between said boost valve (48) and said second secondary piston (34).

7. The braking system of claim 6 wherein at least one of the first, second, or third brake pressure valve arrangements is an ABS valve arrangement.

8. The braking system of claim 1 to 7 wherein said boost valve (48) is incorporated into a hydraulic unit (23) adapted to be located remotely from said master cylinder (22).

9. The braking system of claim 8 wherein said remotely located hydraulic unit (23) further includes said first, second and third valve arrangements.

10. The braking system of claim 9 wherein said first (24a) and second (24b) brake actuators are vehicle rear brakes, and where said first valve arrangement is operable to proportion fluid pressure to said first (24a) and second (24b) brake actuators relative to fluid pressure to said third (24c) and fourth (24d) brake actuators.

11. The braking system of claim 10 wherein said primary piston (26) is operable to pressurize fluid in a primary circuit (72), and wherein the system further includes a pedal simulator (74) connected to said primary circuit (72).

12. The braking system of claim 11 wherein the system further includes an isolation valve arrangement (168, 176) for normally permitting fluid in said primary circuit (72) to act on said pedal simulator (74) and, in the event of a detected fault, prevents fluid from acting on said pedal simulator (74) and connects said primary circuit (72) to said first circuit (49) to pressurize said first circuit (49).

13. The braking system of claim 12 wherein said remotely located hydraulic unit (23) further includes said pedal simulator (74) and said isolation valve arrangement.

14. The braking system of claim 12 wherein the system includes a low pressure fluid reservoir (45) and said boost valve (48) is connected to said fluid reservoir (45), and wherein said isolation valve arrangement, in the event of a detected fault, is further operable to disconnect said boost valve (48) from said fluid reservoir (45).

15. The braking system of claim 14 wherein said pedal simulator (74) includes a spring biased pedal simulator piston (80) having one side connected to said primary circuit (72) and having an opposite side connected to said fluid reservoir (45), and wherein said isolation valve arrangement Is further operable, in the event of a detected fault, to disconnect said pedal simulator (74) from said fluid reservoir (45).

16. The braking system of claim 15 wherein said isolation valve arrangement includes a normally open, electrically actuated, two-position, two-way master cylinder isolation valve (168) connected between said primary circuit (72) and said first circuit (49), and a normally closed, electrically actuated, two-position, two-way reservoir isolation valve (176) having a first port connected to said fluid reservoir (45) and a second port connected to said boost valve (48) and said pedal simulator (74), said master cylinder isolation valve (168) and said reservoir isolation valve (176) being energized during normal braking operations and being de-energized in the event of a detected fault.

17. The braking system of claim 16 wherein said boost valve (48) is electrically controlled in response to a driver input based on one or more sensing elements.

18. The braking system of claim 16 wherein the energizing current supplied to at least one of the master cylinder isolation valve (168) and the reservoir isolation valve (176) is controlled in response to the operating parameters of the brake system.

19. The braking system of claim 18 wherein the reservoir isolation (176) is current limited based on a flow rate of fluid flowing through the reservoir isolation valve (176), wherein the reservoir isolation valve (176) is energized using a large current draw during high fluid flow rates for preventing closure of the reservoir isolation valve (176), and wherein the reservoir isolation valve (176) is energized using a small current draw to maintain an open reservoir isolation valve (176) during low flow rates.

20. The braking system of claim 18 wherein current supplied to the master cylinder isolation valve (168) is variably controlled during an initial high force applied to said brake pedal (38) wherein said initial high force applied to said brake pedal (38) results in an increase in the current supplied to the master cylinder isolation valve (168) to prevent said master cylinder isolation valve (168) from opening in the event a pressure differential is greater in the primary circuit (72) in comparison to the first circuit (49), and after said initial high force brake apply, said current supplied to said master cylinder isolation valve (168) is reduced if said pressure differential is greater in said first circuit (49) in comparison to said primary circuit (72).

21. The braking system of claim 1 wherein said source of pressurized fluid includes a motor (42) for driving a pump (46), said motor (42) being a flux switching brushless motor, wherein a pump output pressure is determined based on the operating speed and input energy of said motor (42).

## Patentansprüche

1. Bremssystem (20) zum Zuführen unter Druck stehender Hydraulikbremsflüssigkeit zu einer Mehrzahl Fahrzeugbremsen (11a-d), wobei das Bremssystem (20) aufweist:
einen Hauptzylinder (22) mit einem Primärkolben (26), der mit einem Fahrzeugbremspedal (38) gekoppelt ist, welches von einem Fahrzeugführer betätigt wird,
eine Quelle (42, 44, 45, 46) unter Druck stehender Bremsflüssigkeit,
einen ersten Bremsflüssigkeitskreislauf (49),
ein Verstärkerventil (48) zum Steuern eines Bremsflüssigkeitsflusses von der Quelle (42, 44, 45, 46) zu dem ersten Kreislauf (49) als Funktion der Betätigung des Bremspedals (38),
einen durch Bremsflüssigkeit aus dem ersten Kreislauf (49) betätigten ersten Bremsaktuator (24a),
einen durch Bremsflüssigkeit aus dem ersten Kreislauf (49) betätigten zweiten Bremsaktuator (24b),
einen zweiten Bremsflüssigkeitskreislauf (67),
einen durch Bremsflüssigkeit aus dem zweiten Kreislauf (67) betätigten dritten Bremsaktuator (24c),
einen dritten Bremsflüssigkeitskreislauf (68),
einen durch Bremsflüssigkeit aus dem dritten Kreislauf (68) betätigten vierten Bremsaktuator (24d),
**dadurch gekennzeichnet, dass** der Hauptzylinder (22) ferner einen ersten Sekundärkolben (32) und einen zweiten Sekundärkolben (34) aufweist, wobei der erste (32) und zweite (34) Sekundärkolben dazu in der Lage sind, jeder unabhängig wirkend durch ein Zuführen von unter Druck stehender Flüssigkeit aus dem ersten Kreislauf (49) verschoben zu werden, um Bremsflüssigkeit in dem zweiten Kreislauf (67) zum Betreiben des dritten Bremsaktuators (24c) bzw. dem dritten Kreislauf (68) zum Betreiben des vierten Bremsaktuators (24d) unter Druck zu setzen.

2. Bremssystem nach Anspruch 1, bei dem der dritte und der vierte Bremsaktuator (24c, 24d) vordere Fahrzeugbremsen sind.

3. Bremssystem nach Anspruch 1 oder 2, bei dem der zweite Kreislauf (67) eine direkte Flüssigkeitsleitungsverbindung zwischen dem Hauptzylinder (22) und dem dritten Bremsaktuator (24c) ist und der dritte Kreislauf (68) eine direkte Flüssigkeitsleitungsverbindung zwischen dem Hauptzylinder (22) und dem vierten Bremsaktuator (24d) ist.

4. Bremssystem nach einem der Ansprüche 1 bis 3, bei dem im Falle eines Hydraulikausfalls des ersten Kreislaufs (49) der Primärkolben (26) auf den ersten (32) und/oder den zweiten (34) Sekundärkolben wirkt, um den zweiten (67) und/oder dritten (68) Kreislauf unter Druck zu setzen.

5. Bremssystem nach einem der Ansprüche 1 bis 4, bei dem der erste Kreislauf (49) eine erste Bremsdruckventilanordnung (55, 56; 57; 58) zwischen dem Verstärkerventil (48) und dem ersten (24a) und zweiten (24b) Bremsaktuator aufweist.

6. Bremssystem nach einem der Ansprüche 1 bis 5, bei dem der erste Kreislauf (49) eine zweite Bremsdruckventilanordnung (51, 52) zwischen dem Verstärkerventil (48) und dem ersten Sekundärkolben (32) und eine dritte Bremsdruckventilanordnung (53, 54) zwischen dem Verstärkerventil (48) und dem zweiten Sekundärkolben (34) aufweist.

7. Bremssystem nach Anspruch 6, bei dem zumindest eine der ersten, zweiten oder dritten Bremsdruckventilanordnungen eine ABS-Ventilanordnung ist.

8. Bremssystem nach einem der Ansprüche 1 bis 7, bei dem das Verstärkerventil (48) in eine Hydraulikeinheit (23) inkorporiert ist, die entfernt von dem Hauptzylinder (22) angeordnet zu werden vermag.

9. Bremssystem nach Anspruch 8, bei dem die entfernt angeordnete Hydraulikeinheit (23) ferner die erste, zweite und dritte Ventilanordnung enthält.

10. Bremssystem nach Anspruch 9, bei dem der erste (24a) und zweite (24b) Bremsaktuator hintere Fahrzeugbremsen sind, wobei die erste Ventilanordnung dazu betriebsfähig ist, Flüssigkeitsdruck dem ersten (24a) und zweiten (24b) Bremsaktuator relativ zu Flüssigkeitsdruck zum dritten (24c) und vierten (24d) Bremsaktuator zuzumessen.

11. Bremssystem nach Anspruch 10, bei dem der Primärkolben (26) dazu betriebsfähig ist, Fluid in einem Primärkreislauf (72) unter Druck zu setzen, wobei das System ferner einen mit dem Primärkreislauf (72) verbundenen Pedalsimulator (74) aufweist.

12. Bremssystem nach Anspruch 11, bei dem das System ferner eine Absperrventilanordnung (168, 176) aufweist, die es Fluid in dem Primärkreislauf (72) normalerweise gestattet, auf den Pedalsimulator (74) zu wirken, und bei Auftreten eines festgestellten Fehlers Fluid daran hindert, auf den Pedalsimulator (74) zu wirken und den Primärkreislauf (72) mit dem ersten Kreislauf (49) verbindet, um den ersten Kreislauf (49) unter Druck zu setzen.

13. Bremssystem nach Anspruch 12, bei dem die entfernt angeordnete Hydraulikeinheit (23) ferner den Pedalsimulator (74) und die Absperrventilanordnung enthält.

14. Bremssystem nach Anspruch 12, bei dem das System ein Niederdruckfluidreservoir (45) umfasst und das Verstärkerventil (48) mit dem Fluidreservoir (45) verbunden ist, wobei die Absperrventilanordnung beim Auftreten eines festgestellten Fehlers ferner dazu betriebsfähig ist, das Verstärkerventil (48) vom Fluidreservoir (45) zu trennen.

15. Bremssystem nach Anspruch 14, bei dem der Pedalsimulator (74) einen unter Federvorspannung stehenden Pedalsimulatorkolben (80) mit einer Seite, die mit dem Primärkreislauf (72) verbunden ist, und mit einer entgegengesetzten Seite aufweist, die mit dem Fluidreservoir (45) verbunden ist, wobei die Absperrventilanordnung ferner dazu betriebsfähig ist, beim Auftreten eines festgestellten Fehlers den Pedalsimulator (74) von dem Fluidreservoir (45) zu trennen.

16. Bremssystem nach Anspruch 15, bei dem die Absperrventilanordnung ein normal offenes, elektrisch betätigtes, Zweistellungs-, Zweiwegehauptzylinderabsperrventil (168) aufweist, das zwischen den Primärkreislauf (72) und den ersten Kreislauf (49) geschaltet ist, und ein normal geschlossenes, elektrisch betätigtes, Zweistellungs-, Zweiwegereservoirabsperrventil (176) mit einem ersten Anschluss, der mit dem Fluidreservoir (45) verbunden ist, und einem zweiten Anschluss, der mit dem Verstärkerventil (48) und dem Pedalsimulator (74) verbunden ist, wobei das Hauptzylinderabsperrventil (168) und das Reservoirabsperrventil (176) während normalen Bremsvorgängen erregt sind und beim Auftreten eines festgestellten Fehlers entregt sind.

17. Bremssystem nach Anspruch 16, bei dem das Verstärkerventil (48) in Antwort auf einen Fahrerinput basierend auf einem oder mehreren Fühlerelementen elektrisch gesteuert ist.

18. Bremssystem nach Anspruch 16, bei dem der dem Hauptzylinderabsperrventil (168) und/oder dem Reservoirabsperrventil (176) zugeführte Erregerstrom in Abhängigkeit der Betriebsparameter des Bremssystems gesteuert ist.

19. Bremssystem nach Anspruch 18, bei dem das Reservoirabsperrventil (176) basierend auf einem durch das Reservoirabsperrventil (176) strömenden Durchfluss an Fluid strombegrenzt ist, wobei das Reservoirabsperrventil (176) bei hohen Fluiddurchflussraten mit einer großen Stromaufnahme erregt wird, um ein Schließen des Reservoirabsperrventils (176) zu verhindern, und wobei das Reservoirabsperrventil (176) mit einer geringen Stromaufnahme erregt wird, um bei niedrigen Durchflussraten das Reservoirabsperrventil (176) offen zu halten.

20. Bremssystem nach Anspruch 18, bei dem ein dem Hauptzylinderabsperrventil (168) zugeführter Strom während einer anfänglich auf das Bremspedal (38) aufgebrachten, hohen Kraft variabel gesteuert wird, wobei die anfänglich auf das Bremspedal (38) aufgebrachte hohe Kraft ein Ansteigen des dem Hauptzylinderabsperrventil (168) zugeführten Stroms bewirkt, um das Hauptzylinderabsperrventil (168) für den Fall am Öffnen zu hindern, in dem ein Differenzdruck im Primärkreislauf (72) verglichen mit dem ersten Kreislauf (49) größer ist, und nach der anfänglichen hohen Bremskraftaufbringung der dem Hauptzylinderabsperrventil (168) zugeführte Strom verringert wird, wenn der Differenzdruck in dem ersten Kreislauf (49) im Vergleich zum Primärkreislauf (72) größer ist.

21. Bremssystem nach Anspruch 1, bei dem die Quelle unter Druck stehenden Fluids einen Motor (42) zum Antreiben einer Pumpe (46) aufweist, wobei der Motor (42) ein flussschaltender, bürstenloser Motor ist, wobei ein Pumpenausgangsdruck basierend auf der Betriebsgeschwindigkeit und der Energiezufuhr des Motors (42) festgelegt ist.

## Revendications

1. Système de freinage (20) pour appliquer un liquide de frein hydraulique sous pression à une pluralité de freins (11a-d) d'un véhicule, le système de freinage (20) comprenant :
un maître-cylindre (22) incluant un piston primaire (26) couplé à une pédale de frein (38) d'un véhicule manoeuvrée par un conducteur du véhicule ;
une source (42, 44, 45, 46) de liquide de frein sous pression ;
un premier circuit de liquide de frein (49) ;
une soupape de suralimentation (48) pour commander un flux de liquide de frein de ladite source (42, 44, 45, 46) jusqu'audit premier circuit (49) en fonction de l'utilisation de la pédale de frein (38) ;
un premier actionneur de frein (24a) manoeuvré par le liquide de frein provenant dudit premier circuit (49) ;
un deuxième actionneur de frein (24b) manoeuvré par le liquide de frein provenant dudit premier circuit (49) ;
un deuxième circuit de liquide de frein (67) ;
un troisième actionneur de frein (24c) actionné par le liquide de frein provenant dudit deuxième circuit (67) ;
un troisième circuit de liquide de frein (68) ;
un quatrième actionneur de frein (24d) actionné par le liquide de frein provenant dudit troisième circuit (68) ;
**caractérisé en ce que** le maître-cylindre (22) comprend en outre un premier piston secondaire (32) et un deuxième piston secondaire (34), lesdits premier (32) et deuxième (34) pistons secondaires étant chacun aptes à être indépendamment opérationnellement déplacés par une application de liquide sous pression provenant dudit premier circuit (49) pour mettre sous pression le liquide de frein dans, respectivement, ledit deuxième circuit (67) pour manoeuvrer ledit troisième actionneur de frein (24c) et ledit troisième circuit (68) pour manoeuvrer ledit quatrième actionneur de frein (24d).

2. Système de freinage selon la revendication 1, dans lequel lesdits troisième et quatrième actionneurs de frein (24c, 24d) sont des freins avant du véhicule.

3. Système de freinage selon la revendication 1 ou 2, dans lequel ledit deuxième circuit (67) est une connexion de ligne de liquide directe entre ledit maître-cylindre (22) et ledit troisième actionneur de frein (24c), et ledit troisième circuit (68) est une connexion de ligne de liquide directe entre ledit maître-cylindre (22) et ledit quatrième actionneur de frein (24d).

4. Système de freinage selon la revendication 1 à 3, dans lequel, dans le cas d'une panne hydraulique dudit premier circuit (49), ledit piston primaire (26) agit sur au moins l'un desdits premier (32) et deuxième (34) pistons secondaires pour mettre sous pression au moins l'un desdits deuxième (67) et troisième (68) circuits.

5. Système de freinage selon la revendication 1 à 4, dans lequel ledit premier circuit (49) inclut un premier agencement de soupape de pression de frein (55, 56 ; 57, 58) entre ladite soupape de suralimentation (48) et lesdits premier (24a) et deuxième (24b) actionneurs de frein.

6. Système de freinage selon la revendication 1 à 5, dans lequel ledit premier circuit (49) inclut un deuxième agencement de soupape de pression de frein (51, 52) entre ladite soupape de suralimentation (48) et ledit premier piston secondaire (32), et un troisième agencement de soupape de pression de frein (53, 54) entre ladite soupape de suralimentation (48) et ledit deuxième piston secondaire (34).

7. Système de freinage selon la revendication 6, dans lequel au moins l'un des premier, deuxième ou troisième agencements de soupape de pression de frein est un agencement de soupape ABS.

8. Système de freinage selon la revendication 1 à 7, dans lequel ladite soupape de suralimentation (48) est incorporée dans une unité hydraulique (23) adaptée pour être installée à distance dudit maître-cylindre (22).

9. Système de freinage selon la revendication 8, dans lequel ladite unité hydraulique (23) installée à distance inclut en outre lesdits premier, deuxième et troisième agencements de soupape.

10. Système de freinage selon la revendication 9, dans lequel lesdits premier (24a) et deuxième (24b) actionneurs de frein sont des freins arrière du véhicule, et dans lequel ledit premier agencement de soupape est manoeuvrable pour distribuer proportionnellement la pression de liquide vers lesdits premier (24a) et deuxième (24b) actionneurs de frein par rapport à la pression de liquide vers lesdits troisième (24c) et quatrième (24d) actionneurs de frein.

11. Système de freinage selon la revendication 10, dans lequel ledit piston primaire (26) est manoeuvrable pour mettre sous pression le liquide dans un circuit primaire (72), et dans lequel le système inclut en outre un simulateur de pédale (74) connecté audit circuit primaire (72).

12. Système de freinage selon la revendication 11, dans lequel le système inclut en outre un agencement de soupape d'isolement (168, 176) pour normalement permettre que le liquide dans ledit circuit primaire (72) agisse sur ledit simulateur de pédale (74) et, dans le cas de la détection d'un défaut, empêche le liquide d'agir sur ledit simulateur de pédale (74) et connecte ledit circuit primaire (72) audit premier circuit (49) pour mettre sous pression ledit premier circuit (49).

13. Système de freinage selon la revendication 12, dans lequel ladite unité hydraulique (23) installée à distance inclut en outre ledit simulateur de pédale (74) et ledit agencement de soupape d'isolement.

14. Système de freinage selon la revendication 12, dans lequel le système inclut un réservoir de liquide basse pression (45) et ladite soupape de suralimentation (48) est connectée audit réservoir de liquide (45), et dans lequel ledit agencement de soupape d'isolement, dans le cas de la détection d'un défaut, est en outre manoeuvrable pour déconnecter ladite soupape de suralimentation (48) dudit réservoir de liquide (45).

15. Système de freinage selon la revendication 14, dans lequel ledit simulateur de pédale (74) inclut un piston de simulateur de pédale à poussée par ressort (80) ayant un côté connecté audit circuit primaire (72) et ayant un côté opposé connecté audit réservoir de liquide (45), et dans lequel ledit agencement de soupape d'isolement est en outre manoeuvrable, dans le cas de la détection d'un défaut, pour déconnecter ledit simulateur de pédale (74) dudit réservoir de liquide (45).

16. Système de freinage selon la revendication 15, dans lequel ledit agencement de soupape d'isolement inclut une soupape d'isolement de maître-cylindre (168) bidirectionnelle à deux positions, à commande électrique, normalement ouverte, connectée entre ledit circuit primaire (72) et ledit premier circuit (49), et une soupape d'isolement de réservoir (176) bidirectionnelle à deux positions, à commande électrique, normalement fermée ayant un premier orifice connecté audit réservoir de liquide (45) et un deuxième orifice connecté à ladite soupape de suralimentation (48) et audit simulateur de pédale (74), ladite soupape d'isolement de maître-cylindre (168) et ladite soupape d'isolement de réservoir (176) étant mises sous tension lors d'opérations de freinage normales et étant mises hors tension dans le cas de la détection d'un défaut.

17. Système de freinage selon la revendication 16, dans lequel ladite soupape de suralimentation (48) est commandée électriquement en réponse à une entrée du conducteur sur la base d'un ou plusieurs élément(s) de détection.

18. Système de freinage selon la revendication 16, dans lequel le courant de mise sous tension délivré à au moins l'une de la soupape d'isolement de maître-cylindre (168) et de la soupape d'isolement de réservoir (176) est commandé en réponse aux paramètres opérationnels du système de freinage.

19. Système de freinage selon la revendication 18, dans lequel l'isolement du réservoir (176) est limité par le courant sur la base d'un débit de liquide passant à travers la soupape d'isolement de réservoir (176), dans lequel la soupape d'isolement de réservoir (176) est mise sous tension en utilisant une quantité importante de courant lors de débits de liquide élevés pour empêcher la fermeture de la soupape d'isolement de réservoir (176), et dans lequel la soupape d'isolement de réservoir (176) est mise sous tension en utilisant une petite quantité de courant pour maintenir une soupape d'isolement de réservoir (176) ouverte lors de débits bas.

20. Système de freinage selon la revendication 18, dans lequel le courant délivré à la soupape d'isolement de maître-cylindre (168) est commandé de façon variable lors d'une force initiale élevée appliquée à ladite pédale de frein (38) dans lequel ladite force initiale élevée appliquée à ladite pédale de frein (38) résulte en une augmentation du courant délivré à la soupape d'isolement de maître-cylindre (168) pour empêcher que ladite soupape d'isolement de maître-cylindre (168) ne s'ouvre dans le cas où un différentiel de pression est plus grand dans le circuit primaire (72) que dans le premier circuit (49), et après que ladite force initiale élevée est appliquée, ledit courant délivré à la soupape d'isolement de maître-cylindre (168) est diminué si ledit différentiel de pression est plus grand dans ledit premier circuit (49) que dans ledit circuit primaire (72).

21. Système de freinage selon la revendication 1, dans lequel ladite source de liquide sous pression inclut un moteur (42) pour entraîner une pompe (46), ledit moteur (42) étant un moteur sans balai à commutation de flux, dans lequel une pression de sortie de pompe est déterminée sur la base de la vitesse opérationnelle et de l'énergie d'entrée dudit moteur (42).
